# EUROPEAN PATENT APPLICATION

(11) **EP 4 822 810 A2**
(43) Date of publication of application: **14.10.2026**
(21) Application number: 26201871.6
(22) Date of filing: 13.10.2022
(51) Int. Cl.: H01M 10/0587

(54) **CYLINDRICAL SECONDARY BATTERY TO WHICH LASER WELDING IS APPLIED AND FABRICATING METHOD THEREOF, BATTERY PACK AND VEHICLE INCLUDING THE SAME**

(30) Priority: 14.10.2021 KR 20210136997; 18.02.2022 KR 20220021589
(62) Document number(s) of the earlier application(s) in accordance with Art. 76 EPC: 22881380.4 / 4 333 142
(71) Applicant: LG Energy Solution, Ltd., Seoul 07335 (KR)
(72) Inventor: KIM, Min-Woo, 34122 Daejeon (KR); KIM, Do-Gyun, 34122 Daejeon (KR)
(74) Representative: Goddar, Heinz J.

(57) **Abstract**

A cylindrical secondary battery having an improved electrode terminal structure and its fabricating method are provided. The cylindrical secondary battery according to the present disclosure has an improved electrode terminal structure, and a first current collector plate and an electrode terminal are coupled through a laser welding method. A laser welding portion formed on a contact surface of the first current collector plate and the electrode terminal is located in an overlapping area of a winding center hole of an electrode assembly, the first current collector plate and the electrode terminal.

## Description

### TECHNICAL FIELD

The present disclosure relates to a cylindrical secondary battery and a fabricating method thereof. The present disclosure also relates to a battery pack and a vehicle including the cylindrical secondary battery. The present application claims priority to Korean Patent Application No. 10-2021-0136997 filed on October 14, 2021 and Korean Patent Application No. 10-2022-0021589 filed on February 18, 2022 in the Republic of Korea, the disclosure of which is incorporated herein by reference.

### BACKGROUND ART

Secondary batteries that are easy to apply according to product groups and have electrical characteristics such as high energy density are universally applied not only to portable devices, but also to electric vehicles (EVs) and hybrid electric vehicles (HEVs) driven by an electric drive source. These secondary batteries are attracting attention as a new energy source for improving eco-friendliness and energy efficiency because they have the primary advantage of being able to dramatically reduce the use of fossil fuels as well as the advantage of generating no by-products from the use of energy.

As a type of secondary battery, cylindrical, prismatic and pouch-type secondary batteries are known. In the case of a cylindrical secondary battery, a separator that is an insulator is interposed between the positive electrode and the negative electrode and wound up to form an electrode assembly in the form of a jelly roll, which is inserted into the battery can together with electrolyte to form a battery. In addition, a strip-shaped electrode tab may be connected to the uncoated portion of each of the positive electrode and the negative electrode, and the electrode tab connects the electrode assembly and the electrode terminal exposed to the outside. However, according to the conventional cylindrical secondary battery having such a structure, since current is concentrated on the strip-shaped electrode tab coupled with the positive electrode uncoated portion and/or the negative electrode uncoated portion, the resistance is large, a lot of heat is generated, and the current collection efficiency is not good.

For small cylindrical secondary batteries with a form factor of 18650 or 21700, resistance and heat are not a major issue. However, when the form factor is increased to apply the cylindrical secondary battery to an EV or the like, a lot of heat is generated around the electrode tab during the fast charging process, and thus the cylindrical secondary battery may be ignited. Here, the form factor means a value indicating the diameter and height of a cylindrical secondary battery. In the numerical value representing the form factor, the first two numbers indicate the diameter of the cell, the next two numbers indicate the height of the cell, and the last number 0 indicates that the cell has a circular cross section. If the height of the cell exceeds 100 mm, the last number 0 can be omitted because a 3-digit number is required to indicate the height of the cell.

In order to solve the resistance and heat issues in a cylindrical secondary battery with an increased form factor, a cylindrical secondary battery having a structure with improved current collection efficiency by using a current collector plate having a larger area than the strip-shaped electrode tab (so-called a tab-less cylindrical secondary battery) is presented.

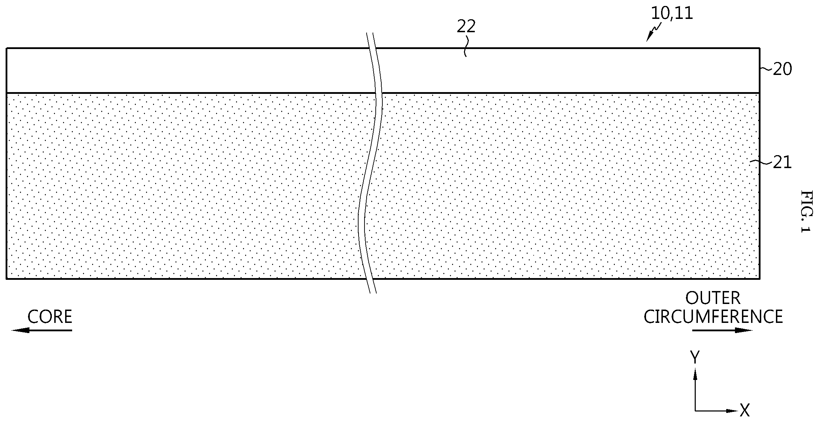

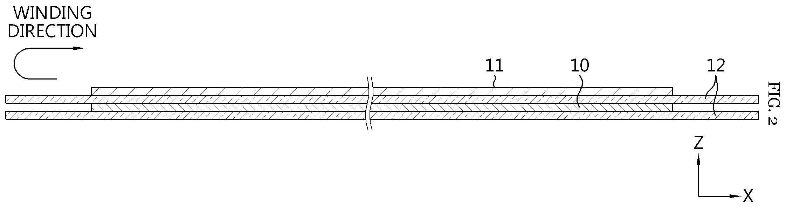

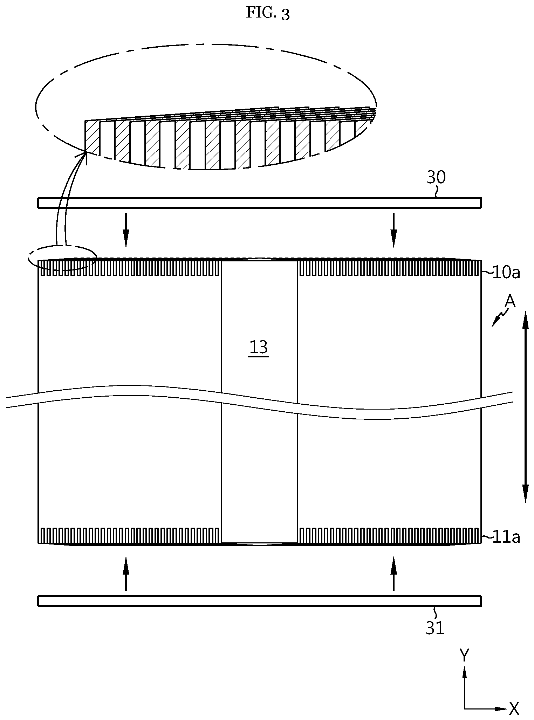

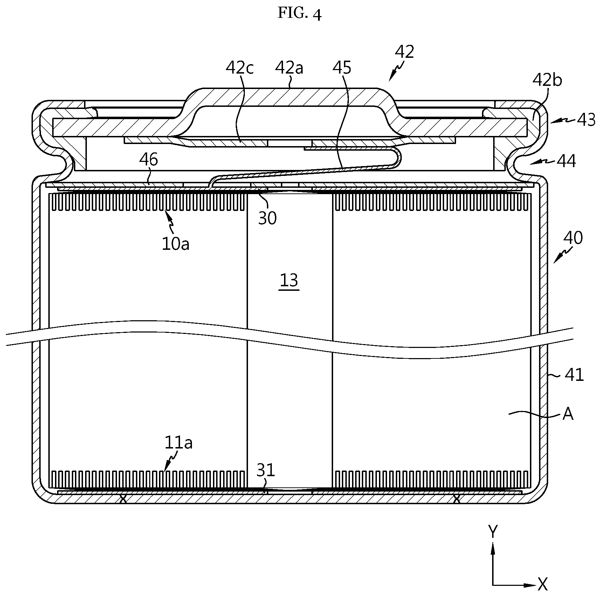

FIGS. 1 to 3 are diagrams showing a fabricating process of a conventional tab-less cylindrical secondary battery. FIG. 1 shows the structure of the electrode plate, FIG. 2 shows the process of winding the electrode plate, and FIG. 3 shows the process of welding the current collector plate to the bent surface of the uncoated portion. FIG. 4 is a cross-sectional view of a conventional tab-less cylindrical secondary battery, taken in the longitudinal direction Y.

Referring to FIG. 1, a positive electrode plate 10 and a negative electrode plate 11 have a structure in which a sheet-shaped current collector 20 is coated with an active material 21, and an uncoated portion 22 not coated with an active material is provided at one long side along the winding direction X. Based on the direction along the long side of the current collector 20 (X direction), one side becomes the core, and the other side becomes the outer circumference.

The electrode assembly A is fabricated by sequentially stacking the positive electrode plate 10 and the negative electrode plate 11 together with two separators 12 as shown in FIG. 2, and then winding them in one direction X from the core. At this time, the uncoated portions of the positive electrode plate 10 and the negative electrode plate 11 are disposed in opposite directions along the short side of the current collector 20 (Y direction).

Referring to FIG. 3, a winding center hole 13 is formed in the inner core of the electrode assembly A fabricated by the method of FIG. 2. After the winding process, the uncoated portion 10a of the positive electrode plate 10 and the uncoated portion 11a of the negative electrode plate 11 are bent toward the core. After that, current collector plates 30, 31 are connected to the uncoated portions 10a, 11a.

A separate electrode tab is not attached to each uncoated portion 10a, 11a, but the current collector plates 30, 31 are connected to an external electrode terminal, and a current path is formed with a large cross section along the winding axis direction of the electrode assembly A (see the arrow). Thus, there is an advantage of lowering the resistance of the secondary battery. This is because resistance is inversely proportional to the cross sectional area of the path through which the current flows.

However, when the form factor of the cylindrical secondary battery increases and the magnitude of the charging current during rapid charging increases, the heat problem also occurs again in the tab-less cylindrical secondary battery.

Specifically, as shown in FIG. 4, the conventional tab-less cylindrical secondary battery 40 includes a battery can 41 and a sealing body 42. The sealing body 42 includes a cap plate 42a, a sealing gasket 42b and a connection plate 42c. The sealing gasket 42b surrounds the edge of the cap plate 42a and is fixed by a crimping part 43. In addition, the electrode assembly A is fixed in the battery can 41 by a beading part 44 to prevent vertical movement.

Typically, the positive electrode terminal is the cap plate 42a of the sealing body 42, and the negative electrode terminal is the battery can 41. Accordingly, the current collector plate 30 coupled with the uncoated portion 10a of the positive electrode plate 10 is connected to the connection plate 42c attached to the cap plate 42a through the strip shaped lead 45. In addition, the current collector plate 31 coupled with the uncoated portion 11a of the negative electrode plate 11 is connected to the bottom of the battery can 41. The insulator 46 covers the current collector plate 30 to prevent the battery can 41 and the uncoated portion 10a of the positive electrode plate 10 having different polarities from contacting each other and causing a short circuit.

In the cylindrical secondary battery 40, when the current collector plate 30 is connected to the connection plate 42c, the strip-shaped lead 45 is used. The lead 45 is separately attached to the current collector plate 30 or fabricated integrally with the current collector plate 30. However, since the lead 45 is in the form of a thin strip, when a fast charging current flows, a lot of heat is generated due to its small area. In addition, excessive heat generated from lead 45 may be transferred to the electrode assembly A and contract the separator 12 (FIG. 2), thereby causing an inner short circuit, which is a major cause of thermal runaway.

The lead 45 also occupies a significant amount of installation space within the battery can 41. Therefore, the cylindrical secondary battery 40 including the lead 45 has low space efficiency, so there is a limit in increasing the energy density. Therefore, there is a demand in the art to improve the electrode terminal structure while solving the heat problem of the cylindrical secondary battery in order to increase the space efficiency in the battery can.

On the other hand, the cylindrical secondary battery 40 includes current collector plates 30, 31, and portions connected between each current collector plate 30, 31 and other components are present in the upper and lower portions of the cylindrical secondary battery 40. Various welding processes may be used for the connection between each current collector plate 30, 31 and other components at that location. At this time, it is important to achieve proper bonding strength with high efficiency and to weld without causing damage to the object to be welded or surrounding parts.

In the welding process, when resistance welding is used, if the object to be welded is made of an aluminum material, an oxide film is deposited on the welding rod, which makes continuous welding impossible. Moreover, when the oxide film is deposited in this way, heat is already generated in the welding rod before heat is generated in the object to be welded. If any one of the current collector plates 30, 31 is made of aluminum, the efficiency of the welding process is inevitably reduced when using resistance welding due to the above problem. In addition, if any one of the current collector plates 30, 31 is made of copper, there is a problem that welding defects such as a decrease in bonding strength occur because the resistance of copper is so low not to generate resistance heat. In addition, the resistance welding device places the object to be welded between the upper and lower welding rods and pressurizes, presses the object into a close contact state, and performs welding by resistance heat by applying current, so pressurization is essential. Also, if the pressurization is not perfect, welding may be performed partially, which may cause non-uniformity, and there is also the risk of causing deformation of parts due to pressurization.

In addition, in the welding process, when ultrasonic welding is used, the horn must vibrate in contact with the contact portion. Here, if the vibration direction of the horn is straight or zigzag, there is a high risk of breaking the horn. For example, in the cylindrical secondary battery 40, if the current collector plate 31 is ultrasonically welded to the bottom of the battery can 41, the horn must be inserted through the winding center hole 13 of the electrode assembly A to perform welding, so the ultrasonic welding horn must have a long length equal to or greater than the length extending from one end to the other end of the winding center hole 13. Also, if strong vibration occurs in a straight line or in a zigzag direction due to the long length, there is a high risk of breaking the horn. In consideration of this, a method in which the horn rotates may be applied. However, even in this case, there is a problem in that a lot of burrs are generated and it is difficult to check the presence or absence of a partially uncoupled area. Moreover, in the case of ultrasonic welding, a problem due to foreign substances (metal shavings) generated during welding may also occur. In addition, ultrasonic welding has a problem in that bonding strength deteriorates compared to resistance welding.

Therefore, in the tab-less cylindrical secondary battery fabricating method in which connected portions between the current collector plate and other components are present and the connection is performed by welding, there is a need to apply a welding technique different from the conventional welding method described above.

### DISCLOSURE

### TECHNICAL PROBLEM

The present disclosure is designed to solve the problems of the related art, and therefore the present disclosure is directed to providing a cylindrical secondary battery having an improved electrode terminal structure.

Another object to be solved by the present disclosure is to provide a method for fabricating a cylindrical secondary battery having an improved electrode terminal structure using laser welding.

Another object to be solved by the present disclosure is to provide a battery pack fabricated using the cylindrical secondary battery having an improved structure and a vehicle including the same.

The objects to be solved by the present disclosure are not limited to the above objects, and other objects not mentioned are clearly understood by those of ordinary skill in the art to which the present disclosure belongs from the following disclosure.

### TECHNICAL SOLUTION

A cylindrical secondary battery according to the present disclosure to solve the above object comprises: a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core; a cylindrical battery can configured to accommodate the electrode assembly through an open portion formed in one side and connected to the uncoated portion of the second electrode plate; a sealing body configured to seal the open portion of the battery can to enable insulating from the battery can; a first current collector plate connected to the uncoated portion of the first electrode plate; an electrode terminal riveted through a through hole formed in a bottom of the battery can located opposite to the open portion of the battery can and connected to the first current collector plate; and a laser welding portion formed on a contact surface of the first current collector plate and the electrode terminal, wherein the laser welding portion is located in an overlapping area of the winding center hole, the first current collector plate and the electrode terminal.

Preferably, a converted diameter of the laser welding portion exposed to the surface of the first current collector plate may be 0.15D to 0.90D (D: a diameter of the winding center hole).

Preferably, the electrode terminal may include: a body portion inserted into the through hole; an outer flange portion configured to extend from one side periphery of the body portion exposed through an outer surface of the bottom of the battery can along the outer surface; an inner flange portion configured to extend from the other side periphery of the body portion exposed through an inner surface of the bottom of the battery can toward the inner surface; and a flat portion provided on an inner side of the inner flange portion.

Preferably, in the flat portion, the electrode terminal and the first current collector plate may be coupled by the laser welding portion.

In an aspect, the laser welding portion may be formed from one surface of the first current collector plate oriented toward an inner side of the winding center hole in the coupling area of the first current collector plate and the electrode terminal toward the electrode terminal.

An outer surface of the electrode terminal may be a smooth surface.

In another aspect, the laser welding portion may be an overlapping overlay type of a welding bead for a center portion of the winding center hole.

In another aspect, the laser welding portion may be configured in a linear shape.

At this time, the laser welding portion may form a continuous closed straight line or closed curve. For example, the laser welding portion may be any one of a ring-shaped circle type centering on the center portion of the winding center hole and a wobble circle type centering on the center portion of the winding center hole. Also, the laser welding portion may form an open curve. For example, based on quadrants, one quadrant may be in the form of an open structure. For example, it may have a C shape or the like.

In another aspect, the laser welding portion may be a multi spot type formed in a radially symmetrical position with respect to the center portion of the winding center hole.

In another aspect, the laser welding portion may be any one of an X-type in which two lines intersect at the center portion of the winding center hole, a rectangular border type centering on the center portion of the winding center hole, an L-type in which two lines meet at one point, and a 8 type in which two circles circumscribe.

In another aspect, the laser welding portion may have a center in the center portion of the winding center hole, have a polygonal regular or irregular outer circumference, and form a welding bead in a weaving manner to fill the outer circumference.

Preferably, a welding portion tensile force between the first current collector plate and the electrode terminal by the laser welding portion may be 3 kgf or more and 15 kgf or less.

In an aspect, the first current collector plate and the electrode terminal may be made of a material containing aluminum as a main component.

In another aspect, the winding center hole may have a diameter of 2 mm or more and 8 mm or less.

At this time, the laser welding portion exposed to the surface of the first current collector plate may have a converted diameter of 2 mm or more.

Also, at this time, the flat portion of the electrode terminal may have a diameter of 3 mm to 14 mm.

In this case, a ratio of an area of the laser welding portion exposed to the surface of the first current collector plate with respect to an area of the flat portion of the electrode terminal may be 2.04% to 44.4%.

In another aspect, the flat portion and the inner surface of the bottom may be parallel to each other.

In another aspect, an angle between the inner flange portion and the inner surface of the bottom may be 0o to 60o.

Preferably, a recess portion may be provided between the inner flange portion and the flat portion.

In an aspect, the recess portion may have a cross-sectional structure of an asymmetric groove.

In another aspect, the asymmetric groove may include a sidewall of the flat portion and an inclined surface of the inner flange portion connected to an end of the sidewall.

In another aspect, the sidewall may be perpendicular to the inner surface of the bottom.

In another aspect, the sidewall may be inclined toward the flat portion.

Preferably, the thickness of the inner flange portion may decrease as being spaced apart from the body portion.

Preferably, the cylindrical secondary battery may further comprise a rivet gasket interposed between the electrode terminal and the through hole, and the rivet gasket may include: an outer gasket interposed between the outer flange portion and the outer surface of the bottom; and an inner gasket interposed between the inner flange portion and the inner surface of the bottom, wherein the inner gasket may have different thicknesses depending on locations.

In an aspect, in the area of the inner gasket, the thickness of the area interposed between an inner edge of the through hole connected to the inner surface of the bottom and the inner flange portion may be relatively smaller than that of the other area.

In another aspect, in the area of the inner gasket, the area interposed between the through hole and the body portion may have a thickness decreasing as being spaced apart from the outer flange portion.

In another aspect, in the area of the inner gasket, the area interposed between the inner surface of the bottom and an end of the inner flange portion may have a smallest thickness.

In another aspect, the inner edge of the through hole may have a facing surface that faces the inner flange portion.

In another aspect, the inner gasket may extend longer than the inner flange portion so that an end thereof is exposed.

In another aspect, a height of the flat portion may be equal to or greater than a height of an end of the inner gasket with respect to the inner surface of the bottom.

In another aspect, a height of the flat portion may be equal to or greater than a height of the inner flange portion with respect to the inner surface of the bottom.

In another aspect, a height of the inner flange portion may be greater than a height of an end of the inner gasket with respect to the inner surface of the bottom.

Preferably, a height of the inner flange portion may be 0.5 mm to 3.0 mm with respect to the inner surface of the bottom of the battery can.

Preferably, a height of the electrode terminal from a lower surface of the outer flange portion to a surface of the flat portion may be 1.5 mm to 7 mm.

Preferably, a height of the outer flange portion with respect to the outer surface of the bottom of the battery can may be 0.8 mm or more.

Preferably, at least a part of the outer gasket may be exposed to the outside of the outer flange portion, and an exposure width of the outer gasket measured in a direction parallel to the outer surface of the bottom of the battery can may be 0.1 mm to 1 mm.

Preferably, a radius from a center of the body portion to an edge of the outer flange portion may be 10% to 70% with respect to a radius of the bottom of the battery can.

Preferably, a radius from a center of the body portion to an edge of the flat portion may be 4% to 30% with respect to a radius of the bottom.

Preferably, when a ratio of a thickness change of a maximum compression point to the thickness of the gasket before compression is defined as a compression ratio, the compression ratio of the inner gasket may be 30% to 90%.

More preferably, the inner gasket may include polybutylene terephthalate, polyfluoroethylene or polypropylene, and the compression ratio of the inner gasket may be 50% to 90%.

In an aspect, the first current collector plate may include: a rim portion; a first electrode plate coupling portion extending inward from the rim portion and coupled with the uncoated portion of the first electrode plate; and a terminal coupling portion located to be spaced apart from the first electrode plate coupling portion, wherein the electrode terminal may be coupled with the terminal coupling portion.

Preferably, the cylindrical secondary battery may further include an insulator interposed between the battery can and the first current collector plate, and the electrode terminal may be coupled with the terminal coupling portion through the insulator.

More preferably, the cylindrical secondary battery may further comprise an insulator interposed between the first current collector plate and an inner circumference of the bottom of the battery can and between an inner circumference of a sidewall of the battery can and the electrode assembly.

The insulator may include a welding hole configured to expose the flat portion of the electrode terminal to the first current collector plate, and cover a surface of the first current collector plate and one side edge of the electrode assembly.

Preferably, a height from the inner surface of the bottom of the battery can to the flat portion of the electrode terminal may be equal to or smaller than a thickness of the insulator.

Preferably, the cylindrical secondary battery may further comprise a rivet gasket interposed between the electrode terminal and the through hole, and the rivet gasket may include: an outer gasket interposed between the outer flange portion and the outer surface of the bottom; and an inner gasket interposed between the inner flange portion and the inner surface of the bottom.

Preferably, an end of the inner gasket may be exposed to the outside of the inner flange portion.

In another aspect, the welding hole may expose the flat portion and the inner flange portion of the electrode terminal.

In another aspect, the welding hole may expose the flat portion and the inner flange portion of the electrode terminal, and the inner gasket.

In another aspect, the ratio of a form factor obtained by dividing a diameter of the cylindrical secondary battery by a height may be greater than 0.4.

In an aspect, the rim portion may be in the form of a rim whose inner area is at least partially empty.

Preferably, the first electrode plate coupling portion and the terminal coupling portion may be connected by the rim portion.

In addition, the terminal coupling portion may be located in a center portion of an internal space of the rim portion.

Preferably, the first electrode plate coupling portion may be provided in plurality.

In this case, the plurality of first electrode plate coupling portions may be arranged at equal intervals from each other along a circumferential direction.

Further, the plurality of first electrode plate coupling portions may have the same extension length.

Furthermore, the terminal coupling portion may be disposed to be surrounded by the plurality of first electrode plate coupling portions.

Preferably, the terminal coupling portion may be disposed at a position corresponding to the winding center hole.

Preferably, at least a partial area of the uncoated portion of the first electrode plate may be divided into a plurality of segments, and the plurality of segments may be bent along a radial direction of the electrode assembly.

Preferably, the plurality of segments may be overlapped in multiple layers along the radial direction of the electrode assembly.

In an aspect, the first current collector plate may include: a rim portion; a first electrode plate coupling portion extending inward from the rim portion and coupled with the uncoated portion of the first electrode plate; and a terminal coupling portion located to be spaced apart from the first electrode plate coupling portion, and the first electrode plate coupling portion may be coupled to an area in which the plurality of segments are overlapped in multiple layers.

In another aspect, the battery can may include a beading part formed at an end adjacent to the open portion and press-fitted toward an inner side, and the sealing body may include a cap plate with no polarity and a sealing gasket interposed between an edge of the cap plate and the open portion of the battery can.

The battery can may further include a crimping part that is extended and bent to the inner side of the battery can and wraps and fixes the edge of the cap plate together with the sealing gasket.

The cap plate may include a vent notch that ruptures when a pressure inside the battery can exceeds a threshold.

The vent notch may rupture when an internal pressure of the battery can reaches 15 to 35 kgf/cm2.

In another aspect, the cylindrical secondary battery may further comprise a second current collector plate coupled with the uncoated portion of the second electrode plate, and in the second current collector plate, at least a part of an edge that does not come into contact with the uncoated portion of the second electrode plate may be interposed between the beading part and the sealing gasket and fixed by the crimping part.

At least a part of the edge of the second current collector plate may be fixed by welding to an inner circumference of the beading part adjacent to the crimping part.

In another aspect, at least a partial area of the uncoated portion of the second electrode plate may be divided into a plurality of segments, and the plurality of segments may be bent along a radial direction of the electrode assembly.

At this time, the plurality of segments may be overlapped in multiple layers along the radial direction of the electrode assembly.

In this case, the second current collector plate may include: a second electrode plate coupling portion coupled with the uncoated portion of the second electrode plate; and a can coupling portion electrically coupled to the beading part, and the second electrode plate coupling portion may be coupled to an area in which the plurality of segments are overlapped in multiple layers.

The second electrode plate coupling portion and the can coupling portion may be indirectly connected through a center portion of the second current collector plate and may not be directly connected to each other.

The second electrode plate coupling portion may have at least one injection hole.

The second current collector plate may include a circular current collector plate hole in a center portion of the second current collector plate.

A diameter of the current collector plate hole may be equal to or greater than a diameter of the winding center hole.

The present disclosure also provides a cylindrical secondary battery fabricating method. The cylindrical secondary battery fabricating method according to the present disclosure comprises: providing a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core; connecting a first current collector plate to the uncoated portion of the first electrode plate; providing a cylindrical battery can having an open portion formed in one side and including an electrode terminal riveted through a through hole formed in a bottom of the battery can located opposite to the open portion of the battery can; inserting the electrode assembly into the battery can so that the first current collector plate is oriented toward the bottom of the battery can; and forming a laser welding portion on a contact surface of the first current collector plate and the electrode terminal by using a laser welding device, wherein a laser beam of the laser welding device is irradiated into the winding center hole along a longitudinal direction of the winding center hole.

In an aspect, the laser welding device may weld the first current collector plate to the electrode terminal in a pulse mode or a continuous mode.

The laser welding device may irradiate the laser beam with a pulse width of 100 ns to 2000 ns.

The laser welding device may irradiate the laser beam with an output of 50 W to 4 kW.

The laser welding device may irradiate the laser beam with a processing speed of 40 mm/s to 1000 mm/s.

The laser beam of the laser welding device may have a spot diameter of 10 µm to 200 µm.

Preferably, a laser beam of a pulse dot type may be irradiated and overlapped to a center portion of the winding center hole to form a laser welding portion of an overlapping overlay type.

Preferably, the step of forming a laser welding portion may include: inserting a hollow tube into the winding center hole so that at least a part of the first current collector plate is exposed into an inner hollow of the hollow tube; and allowing the laser beam irradiated by the laser welding device to pass through the inner hollow of the hollow tube so that the first current collector plate is welded to the electrode terminal.

At this time, the first current collector plate may be compressed to the electrode terminal by the hollow tube.

The cylindrical secondary battery fabricating method may comprise supplying an inert gas for removing an oxygen atmosphere through a space between the hollow tube and an inner circumference of the winding center hole while the laser welding is being performed.

A length of the hollow tube may be greater than a height of the electrode assembly, and the hollow tube may be a metal hollow tube.

In addition, the cylindrical secondary battery fabricating method may include removing welding fume at one end of the winding center hole while the laser welding is being performed.

The present disclosure provides a cylindrical secondary battery fabricating method for fabricating the cylindrical secondary battery according to the present disclosure, and the laser welding portion is formed by welding by irradiating a laser beam through the winding center hole at the inside of the battery can.

Here, the laser beam may heat from the first current collector plate.

A temperature difference may be provided between a part where the laser beam is intensively irradiated and a surrounding area.

After preheating by the laser beam, full-scale melting may occur.

Preferably, the laser beam may be a single mode.

The present disclosure provides a battery pack comprising at least one cylindrical secondary battery, and a vehicle comprising at least one battery pack.

### ADVANTAGEOUS EFFECTS

According to one aspect of the present disclosure, by improving the electrode terminal structure of the cylindrical secondary battery to increase the space efficiency in the battery can, it is possible to lower the internal resistance of the cylindrical secondary battery and increase the energy density.

According to another aspect of the present disclosure, by improving the electrode terminal structure of the cylindrical secondary battery to expand the cross sectional area of the current path, it is possible to solve the internal heating problem that occurs during rapid charging.

According to another aspect of the present disclosure, electrical wiring for serial and/or parallel connection of the cylindrical secondary batteries may be performed on one side of the cylindrical secondary battery. Therefore, space efficiency is good and the efficiency of electrical wiring is high, so there is a significant improvement effect in the assembly process of an electric vehicle and maintenance and repair of a battery pack.

According to another aspect of the present disclosure, there is provided a cylindrical secondary battery including a first current collector plate having a structure capable of preventing the force from being concentrated on the coupling area between components even when an external shock and/or vibration is applied during use and/or a second current collector plate not only having a structure capable of improving the coupling force of the coupling portion with the battery can but also capable of improving the energy density of the cylindrical secondary battery. The first current collector plate and the second current collector plate also have a structure that is easy to laser-weld the first current collector plate to the electrode terminal. Therefore, the mechanical and electrical performance of the cylindrical secondary battery is improved, and it is easy to fabricate the secondary battery by a welding method.

The fabricating method according to the present disclosure is very suitable for a large cell with an increased form factor. Since the height of the jelly roll type electrode assembly included in the large battery is larger than that of the conventional one, the length of the winding center hole is also larger than that of the conventional one. To connect the first current collector plate with the electrode terminal at the bottom of the battery can by welding, it is necessary to prevent damage to the electrode assembly during the welding process. In the fabricating method according to the present disclosure, it is possible to irradiate a laser beam while preventing damage to the electrode assembly at the portion of the first current collector plate placed in the winding center hole having a long length. According to the present disclosure, the first current collector plate may be welded to the electrode terminal while solving the defect problem that may occur due to laser welding, which may meet the demand for high-power, low-resistance batteries in the technical field to which the present disclosure belongs.

According to the fabricating method of the present disclosure, when welding the electrode terminal to the first current collector plate, it is possible to solve the problem of damage to the object to be welded or surrounding parts and the problem of deterioration of bonding strength, which occur when the conventional welding method is applied as it is. Accordingly, the processibility and efficiency of welding may be improved.

According to the fabricating method of the present disclosure, the current collector plate may be connected and coupled to other components without causing problems due to the material of the current collector plate, and without fear of breaking the horn for welding. In addition, since a welding portion is not formed on the outer surface of the cylindrical secondary battery, it is advantageous to ensure a connection effect between the cylindrical secondary battery and the bus bar component during electrical wiring for serial and/or parallel connection of cylindrical secondary batteries.

### DESCRIPTION OF DRAWINGS

The accompanying drawings illustrate a preferred embodiment of the present disclosure and together with the following detailed description, serve to provide further understanding of the technical features of the present disclosure, and thus, the present disclosure should not be construed as being limited to the drawings.
FIG. 1 is a plan view showing the structure of an electrode plate used in a conventional tab-less cylindrical secondary battery.
FIG. 2 is a view showing a winding process of an electrode assembly included in the conventional tab-less cylindrical secondary battery.
FIG. 3 is a view showing a process in which a current collector plate is welded to a bent surface of an uncoated portion in the electrode assembly of FIG. 2.
FIG. 4 is a cross-sectional view of the conventional tab-less cylindrical secondary battery, taken in the longitudinal direction Y.
FIG. 5 is a cross-sectional view of a cylindrical secondary battery according to an embodiment of the present disclosure, taken along the longitudinal direction Y.
FIG. 6 is a cross-sectional view showing a riveting structure of an electrode terminal according to an embodiment of the present disclosure.
FIG. 7 is an enlarged cross-sectional view of section B of FIG. 6.
FIG. 8 is a partially enlarged cross-sectional view showing the riveting structure of an electrode terminal according to another embodiment of the present disclosure.
FIG. 9 is a cross-sectional view of a cylindrical secondary battery according to another embodiment of the present disclosure, taken along the longitudinal direction Y.
FIG. 10 is a plan view exemplarity showing an electrode plate structure according to a preferred embodiment of the present disclosure.
FIG. 11 is a cross-sectional view of the electrode assembly in which the segmental structure of the uncoated portion of the electrode plate according to an embodiment of the present disclosure is applied to the first electrode plate and the second electrode plate, taken along the longitudinal direction Y.
FIG. 12 is a cross-sectional view of the electrode assembly in which the uncoated portion is bent according to an embodiment of the present disclosure, taken along the longitudinal direction Y.
FIG. 13 is a perspective view of an electrode assembly in which the uncoated portion is bent according to an embodiment of the present disclosure.
FIG. 14 is a view showing a process of bonding the electrode terminal and the first current collector plate of the cylindrical secondary battery by laser welding according to an embodiment of the present disclosure.
FIG. 15 is a cross-sectional view of the electrode terminal and the first current collector plate, which are laser-welded.
FIGS. 16 and 17 are views showing various surface shapes of the laser welding portion of the present disclosure.
FIG. 18 is a diagram for explaining a method of calculating a converted diameter of the laser welding portion in the case of three-point welding.
FIG. 19 is a view showing the appearance and converted diameter of the laser welding portion according to the experimental example compared with the diameter of the winding center hole of the electrode assembly.
FIG. 20 is a view showing the appearance and converted diameter of the laser welding portion according to the experimental example compared with the diameter of a hollow tube inserted into the winding center hole of the electrode assembly.
FIGS. 21 to 24 are views showing various embodiments of the first current collector plate.
FIGS. 25 to 28 are views showing various embodiments of the second current collector plate.
FIG. 29 is a schematic diagram showing a battery pack according to an embodiment of the present disclosure.
FIG. 30 is a diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description provided herein and illustration in the drawings are just some preferred embodiments of the present disclosure, but not intended to fully describe the technical features of the present disclosure, so it should be understood that other equivalents and modifications could be made thereto at the time of filing the patent application.

In addition, in order to help the understanding of the present disclosure, the accompanying drawings are not drawn to scale, but dimensions of some components may be exaggerated. Also, the same reference signs may be assigned to the same components in different embodiments.

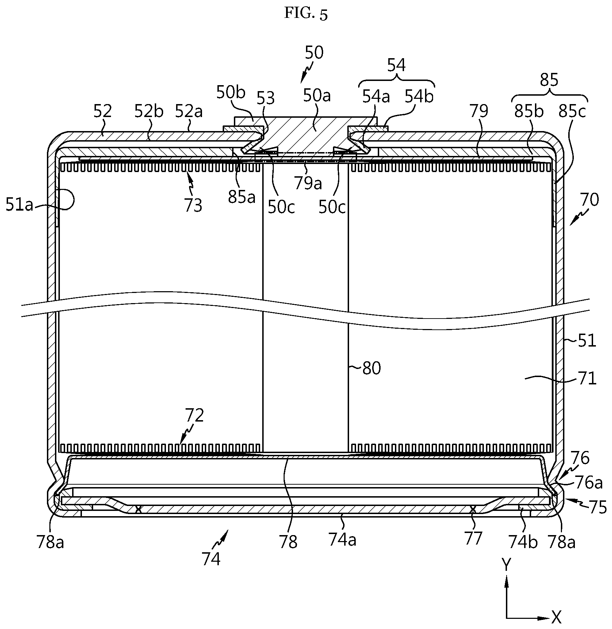

FIG. 5 is a cross-sectional view of a cylindrical secondary battery according to an embodiment of the present disclosure, taken along the longitudinal direction Y.

Referring to FIG. 5, the cylindrical secondary battery 70 according to an embodiment of the present disclosure includes a jelly-roll type electrode assembly 71. The electrode assembly 71 has a structure in which a first electrode plate and a second electrode plate having a sheet shape and a separator interposed therebetween are wound in one direction. In FIG. 5 showing the electrode assembly 71, only uncoated portions 72, 73 that are exposed to the outside of the separator and extend are illustrated in detail, and the winding structure of the first electrode plate, the second electrode plate and the separator is omitted.

A winding center hole 80 is formed in the inner core of the electrode assembly 71. The winding center hole 80 is a place where the winding core, which becomes a winding axis when winding the electrode plate and the separator, is removed. If there is no deformation of the electrode assembly 71 after removing the winding core, the diameter of the winding center hole 80 can be said to be the same as the diameter of the winding core.

The method of winding the electrode assembly 71 is substantially the same as the method of winding the electrode assembly used in fabricating the conventional tab-less cylindrical secondary battery described with reference to FIG. 2.

The first electrode plate and the second electrode plate have a structure in which an active material layer is coated on one side or both sides of a sheet-shaped current collector having a long side and a short side, and include the uncoated portions 72, 73 on one long side end along the winding direction X, respectively. The uncoated portions 72, 73 may be continuously formed along one side end of the current collector. The first electrode plate includes an uncoated portion 73 exposed to the outside of the separator at the long side end, and the second electrode plate includes an uncoated portion 72 exposed to the outside of the separator in a direction opposite to the uncoated portion 73 of the first electrode plate at the long side end. That is, the uncoated portion 72 of the second electrode plate is exposed at the lower portion of the electrode assembly 71, and the uncoated portion 73 of the first electrode plate is exposed at the upper portion of the electrode assembly 71. In an embodiment, the first electrode plate may be a positive electrode plate and the second electrode plate may be a negative electrode plate, and vice versa.

In the present disclosure, the current collector may be appropriately selected according to the polarity of the electrode plate, and aluminum, copper, nickel, or stainless steel may be used as a material thereof, but is not necessarily limited thereto, and metals and metal alloys commonly used as materials of current collectors can be adopted. For example, the current collector for the positive electrode plate may be aluminum or an aluminum alloy, and the current collector for the negative electrode plate may be copper or a copper alloy.

In the present disclosure, the active material coated on the current collector may be any type of active material, provided that the active material is well known in the art.

In an example, the positive electrode active material may include an alkali metal compound expressed by a general chemical formula A[AxMy]O2+z (A includes at least one of Li, Na or K; M includes at least one element selected from Ni, Co, Mn, Ca, Mg, Al, Ti, Si, Fe, Mo, V, Zr, Zn, Cu, Mo, Sc, Zr, Ru, and Cr; x ≥ 0, 1 ≤ x + y ≤ 2, -0.1 ≤ z ≤ 2; and stoichiometric coefficients x, y, and z are selected so that the compound maintains electrically neutral).

Preferably, the positive electrode active material contains lithium transition metal oxide. The lithium transition metal may contain nickel-cobalt-manganese-based lithium oxides, among which a high-concentration nickel-cobalt-manganese-based lithium oxide having a high nickel content may be included.

In another embodiment, the positive electrode active material may be an alkali metal compound xLiM1O2(1-x)Li2M2O3 (M1 includes at least one element having an average oxide state of 3; M2 includes at least one element having an average oxidation state of 4; and 0 ≤ x ≤ 1) disclosed in US 6,677,082, US 6,680,143, etc.

In another example, the positive electrode active material may be lithium metal phosphate expressed by a general chemical formula LiaM1xFe1-xM2yP1-yM3zO4-z (M1 includes at least one element selected from Ti, Si, Mn, Co, Fe, V, Cr, Mo, Ni, Nd, Mg, and Al; M2 includes at least one element selected from Ti, Si, Mn, Co, Fe, V, Cr, Mo, Ni, Nd, Mg, Al, As, Sb, Si, Ge, V, and S; M3 includes an element of a halogen group optionally containing F; 0 < a ≤ 2, 0 ≤ x ≤ 1, 0 ≤ y < 1, 0 ≤ z < 1; and stoichiometric coefficients a, x, y, and z are selected so that the compound maintains electrically neutral), or Li3M2(PO4)3 (M includes at least one element selected from Ti, Si, Mn, Fe, Co, V, Cr, Mo, Ni, Mg, and Al).

Preferably, the positive electrode active material may include primary particles and/or secondary particles in which the primary particles are aggregated.

In an example, the negative electrode active material may use a carbon material, lithium metal or lithium metal compounds, silicon or silicon compounds, tin or tin compounds, etc. Metal oxide such as TiO2 or SnO2 having a potential of less than 2 V may be also used as the negative electrode active material. As the carbon material, low crystalline carbon and high crystalline carbon may be used.

The separator may include a porous polymer film, for example, made of a polyolefin-based polymer such as an ethylene homopolymer, a propylene homopolymer, an ethylene/butene copolymer, an ethylene/hexene copolymer, or an ethylene/methacrylate copolymer, in a single or stack structure thereof. In another example, the separator may be a common porous non-woven fabric, for example, a non-woven fabric made of glass fiber having a high melt point or polyethylene terephthalate fiber.

At least one surface of the separator may include a coating layer of inorganic particles. Additionally, the separator itself may be made of a coating layer of inorganic particles. The particles included in the coating layer may be coupled with a binder so that an interstitial volume exists between adjacent particles.

The inorganic particles may include an inorganic material having a dielectric constant of 5 or more. In a non-limiting example, the inorganic particles may include at least one material selected from the group consisting of Pb(Zr,Ti)O3 (PZT), Pb1-xLaxZr1-yTiyO3 (PLZT), PB(Mg3Nb2/3)O3-PbTiO3 (PMN-PT), BaTiO3, HfO2, SrTiO3, TiO2, Al2O3, ZrO2, SnO2, CeO2, MgO, CaO, ZnO, and Y2O3.

As shown, in the electrode assembly 71, the uncoated portions 72, 73 are disposed in opposite directions to each other. In addition, each uncoated portion 72, 73 is exposed to the outside of the separator. In the electrode assembly 71, at least a part of each of the uncoated portions 72, 73 may be used as an electrode tab by itself. For example, the uncoated portion 72 of the second electrode plate may be used as a negative electrode tab, and the uncoated portion 73 of the first electrode plate may be used as a positive electrode tab.

The cylindrical secondary battery 70 also includes a cylindrical battery can 51 that accommodates the electrode assembly 71 and is connected to the uncoated portion 72 of the second electrode plate. The battery can 51 is made of a conductive metal material. In one example, the battery can 51 may be made of iron, nickel-plated iron, or stainless steel (SUS) material, but the present disclosure is not limited thereto.

Preferably, one side (the lower portion in this embodiment) of the battery can 51 is open to form an open portion. In the battery can 51, the side opposite to the open portion is a closed portion. In this embodiment, the closed portion is a bottom 52 of the battery can 51. The bottom 52 of the battery can 51 is circular. The side (outer circumference) and the bottom 52 of the battery can 51 may be formed integrally. The bottom 52 of the battery can 51 has an approximately flat shape. The battery can 51 accommodates the electrode assembly 71 through the open portion, and also contains an electrolyte together. The side of the battery can 51 extends by a certain length from the bottom 52.

The electrolyte plays a role of enabling the movement of lithium ions generated by electrochemical reactions on the electrode plate inside the secondary battery during charging and discharging. The electrolyte may be a salt having a structure such as A+B-. Here, A+ includes an alkali metal cation such as Li+, Na+ or K+ or a combination thereof. In addition, B- includes at least one anion selected from the group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN-, and (CF3CF2SO2)2N-.

The electrolyte may also be dissolved in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The bottom 52 of the battery can 51 has a structure in which the electrode terminal 50 is riveted to a through hole 53 through a caulking process. In addition, the cylindrical secondary battery 70 may include a rivet gasket 54 interposed between the electrode terminal 50 and the through hole 53.

The electrode terminal 50 is made of a conductive metal material. In one example, the electrode terminal 50 may be made of a material containing aluminum as a main component, but the present disclosure is not limited thereto. The electrode terminal 50 may be made of 10 series aluminum alloy, which is easy to rivet and has low resistance. A part of the electrode terminal 50 is inserted inside the battery can 51, and the other part is exposed to the outside of the battery can 51.

The rivet gasket 54 may be made of a polymer resin having insulation and elasticity. In one example, the rivet gasket 54 may be made of polypropylene, polybutylene terephthalate, polyfluoroethylene, etc., but the present disclosure is not limited thereto.

The cylindrical secondary battery 70 includes a first current collector plate 79 connected to the uncoated portion 73 of the first electrode plate. The connection between the uncoated portion 73 of the first electrode plate and the first current collector plate 79 may be performed by welding. The first current collector plate 79 is also connected to the electrode terminal 50. The first current collector plate 79 and the electrode terminal 50 are connected by laser welding. The first current collector plate 79 may be of the same metal as the current collector and/or the electrode terminal 50 of the first electrode plate, or may be made of a material that is well welded to them. For example, the first current collector plate 79 may be made of a material containing aluminum as a main component, and may be iron, nickel-plated iron, SUS, or the like. The electrode terminal 50 is connected to the uncoated portion 73 of the first electrode plate through the first current collector plate 79.

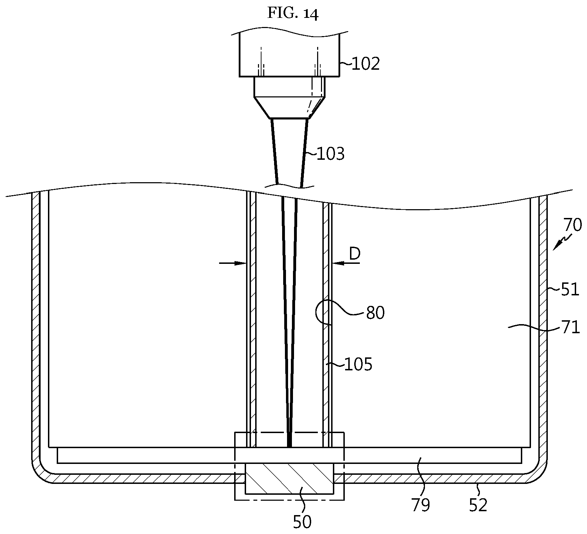

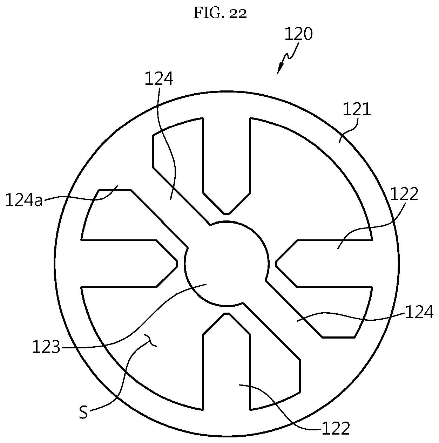

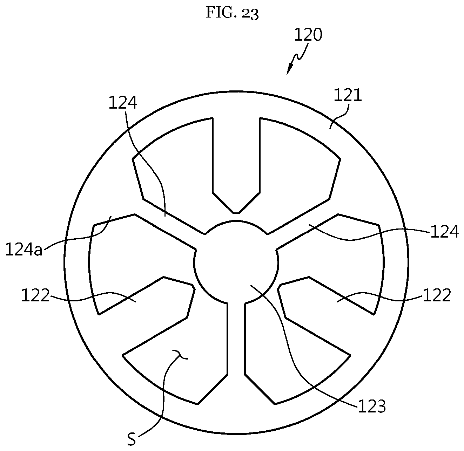

A laser welding portion (not shown) is formed on the contact surface of the first current collector plate 79 and the electrode terminal 50 by laser welding. This laser welding portion is characterized by being located in the overlapping area of the winding center hole 80, the first current collector plate 79 and the electrode terminal 50. The laser welding between the first current collector plate 79 and the electrode terminal 50, the configuration of the laser welding portion and the related fabricating method, and specific embodiments of the first current collector plate 79 will be described in detail below with reference to FIGS. 14 to 24.

The cylindrical secondary battery 70 may also include a sealing body 74 that seals the open portion of the battery can 51 to be insulating from the battery can 51. The sealing body 74 may include a non-polar cap plate 74a and a sealing gasket 74b interposed between the edge of the cap plate 74a and the open portion of the battery can 51.

The cap plate 74a may be made of a conductive metal material such as aluminum, iron, nickel-plated iron, or SUS. In addition, the sealing gasket 74b may be made of polypropylene, polybutylene terephthalate, polyfluoroethylene, or the like having insulation and elasticity. However, the present disclosure is not limited by the material of the cap plate 74a and the sealing gasket 74b. The cap plate 74a may cover the open portion of the battery can 51. The cap plate 74a has no polarity, even if it is made of a conductive metal. No polarity may mean that the cap plate 74a is not connected to the electrode assembly 71. In addition, it may mean that it is electrically insulated from the battery can 51 and the electrode terminal 50. Since it has no polarity, the cap plate 74a does not function as an electrode terminal. The cap plate 74a does not need to be connected to the electrode assembly 71 and the battery can 51, and the material does not necessarily have to be a conductive metal.

The cap plate 74a may include a vent notch 77 that ruptures when the pressure inside the battery can 51 exceeds a threshold. The vent notch 77 may be formed on one side or both sides of the cap plate 74a. The vent notch 77 may form a continuous or discontinuous circular pattern, a straight pattern or any other pattern on the surface of the cap plate 74a. For example, the vent notch 77 may be formed in an approximately circular ring shape having a predetermined width. The circular ring-shaped vent notch 77 may have the same center as the center of the cap plate 74a, and has a radius smaller than the radius of the cap plate 74a.

By controlling the depth and width of the vent notch 77, the rupture pressure of the battery can 51 may be controlled. For example, the vent notch 77 may be set to rupture when the pressure inside the battery can 51 is in the range of 15 to 35 kgf/cm2. The vent notch 77 may be formed by notching to partially reduce the thickness of the battery can 51. The vent notch 77 may have a thickness gradient. The thickness gradient means that it is formed to be inclined with a certain angle based on a preset horizontal surface when seeing the cross section of the vent notch 77. The vent notch 77 ruptures when the pressure inside the battery can 51 rises abnormally, thereby discharging the interior gas to the outside entirely.

The battery can 51 may include a crimping part (crimping part, 75) that is extended and bent to the inner side of the battery can 51 to fix the sealing body 74 and wraps and fixes the edge of the cap plate 74a together with the sealing gasket 74b. Preferably, the lower surface of the cap plate 74a may be located above the lower surface of the crimping part 75. Then, a vent space is formed below the cap plate 74a so that gas may be smoothly discharged when the vent notch 77 ruptures.

The battery can 51 may further include a beading part 76 press-fitted toward the inner side of the battery can 51 in an area adjacent to the open portion. The beading part 76 is recessed toward the inner side of battery can 51. The beading part 76 supports the edge of the sealing body 74, especially the outer circumference of the sealing gasket 74b, when the sealing body 74 is fixed by the crimping part 75.

The cylindrical secondary battery 70 may further include a second current collector plate 78 connected to the uncoated portion 72 of the second electrode plate. The connection between the uncoated portion 72 of the second electrode plate and the second current collector plate 78 may be performed by welding. The second current collector plate 78 may be the same metal as the current collector of the second electrode plate, or may be made of a material that is well welded thereto. For example, it may be copper or a copper alloy, nickel or a nickel alloy, iron, SUS, or a composite material thereof. In the second current collector plate 78, at least a part 78a of the edge that does not come into contact with the uncoated portion 72 of the second electrode plate may be interposed between the beading part 76 and the sealing gasket 74b to be fixed by the crimping part 75. Optionally, at least a part 78a of the edge of the second current collector plate 78 may be fixed to the inner circumference 76a of the beading part 76 adjacent to the crimping part 75 by welding. Accordingly, the second current collector plate 78 is also connected to the battery can 51, and the battery can 51 is connected to the uncoated portion 72 of the second electrode plate through the second current collector plate 78. In addition, the second current collector plate 78 may have a current collector plate hole (not shown) in its center portion. The current collector plate hole does not block the winding center hole 80. Since the second current collector plate 78 includes the current collector plate hole, the laser beam may reach the first current collector plate 79 by passing through the current collector plate hole, in the step of welding the first current collector plate 79 to the electrode terminal 50.

Each current collector plate 78, 79 induces the current generated in each electrode plate of the electrode assembly 71 to the electrode terminal 50 and the battery can 51. Each current collector plate 78, 79 is a component that is connected to draw a current from each uncoated portion 72, 73, which is an end of each electrode plate. Since each current collector plate 78, 79 is directly connected to each uncoated portion 72, 73 by welding or the like to draw current in and out, a separate current collector tab is not required. Therefore, since the installation process of the current collector tab is unnecessary, productivity may be improved. In addition, since the space for accommodating the current collector tab may be reduced, the entire battery structure becomes compact and space utilization is improved.

In addition, the cylindrical secondary battery 70 has a structure in which an area other than the area occupied by the electrode terminal 50 among the outer surfaces of the electrode terminal 50 and the battery can 51 may be used as a positive electrode terminal and a negative electrode terminal, respectively. That is, most of the surface opposite to the open portion of the battery can 51 can be used as a negative electrode terminal. Accordingly, there is an advantage in that it is possible to secure a sufficient area for welding connection components such as a bus bar for electrical wiring.

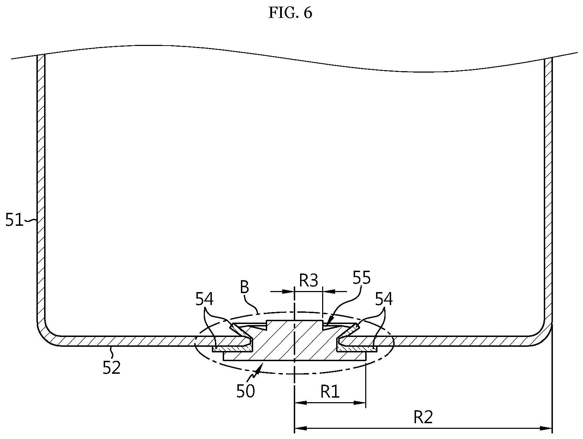

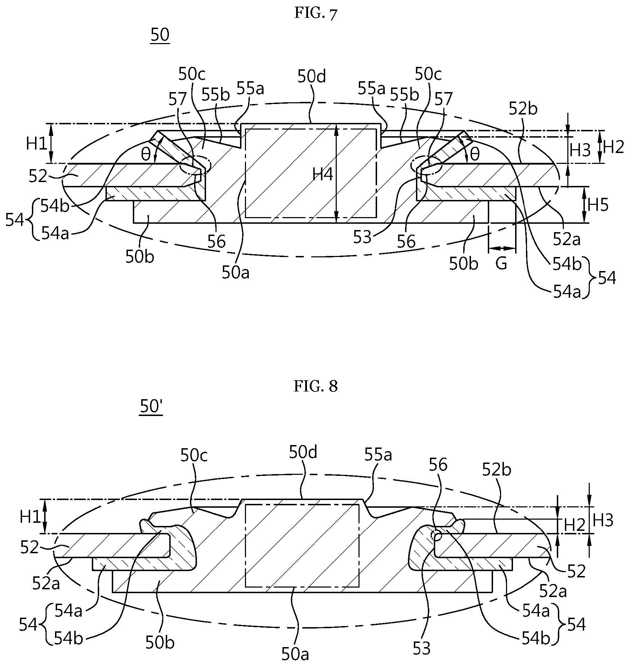

FIG. 6 is a cross-sectional view showing a riveting structure of an electrode terminal according to an embodiment of the present disclosure. FIG. 7 is an enlarged cross-sectional view of section B of FIG. 6. In FIGS. 6 and 7, it is shown that the bottom 52 of the battery can 51 is placed at the lower side.

Referring to FIGS. 6 and 7, preferably, the electrode terminal 50 may include a body portion 50a inserted into the through hole 53, an outer flange portion 50b extending from one side periphery of the body portion 50a exposed through an outer surface 52a of the bottom 52 of the battery can 51 along the outer surface 52a, an inner flange portion 50c extending from the other side periphery of the body portion 50a exposed through an inner surface 52b of the bottom 52 of the battery can 51 toward the inner surface 52b, and a flat portion 50d provided on the inner side of the inner flange portion 50c.

Preferably, at least a part of the first current collector plate 79, for example a central portion 79a (FIG. 5), may be laser-welded to the flat portion 50d of the electrode terminal 50. Accordingly, in the flat portion 50d, the electrode terminal 50 and the first current collector plate 79 may be coupled through the laser welding portion.

Preferably, the flat portion 50d and the inner surface 52b of the bottom 52 of the battery can 51 may be parallel to each other. Here, 'parallel' means substantially parallel when observed with the naked eye.

The flat portion 50d is a surface facing the first current collector plate 79. The surface of the electrode terminal 50 opposite to this surface and exposed to the outside of the battery can 51 may be a flat surface. Furthermore, it may be a smooth surface. Flat refers to level. Smooth means level and slippery.

According to one aspect, the angle (θ) between the inner flange portion 50c and the inner surface 52b of the bottom 52 of the battery can 51 may be 0o to 60o. The magnitude of the angle is determined by the caulking strength when the electrode terminal 50 is installed in the through hole 53 of the battery can 51 by the caulking method. In one example, as the caulking intensity increases, the angle (θ) may decrease to 0o. If the angle exceeds 60o, the sealing effect of the rivet gasket 54 may be deteriorated.

According to another aspect, a recess portion 55 may be provided between the inner flange portion 50c and the flat portion 50d. The recess portion 55 may have a cross-sectional structure of an asymmetric groove. In one example, the asymmetric groove may be approximately V-shaped. The asymmetric groove may include a sidewall 55a of the flat portion 50d and an inclined surface 55b of the inner flange portion 50c connected to an end of the sidewall 55a. The sidewall 55a may be substantially perpendicular to the inner surface 52b of the bottom 52 of the battery can 51. "perpendicular" means substantially perpendicular when observed with the naked eye. As will be described below, the sidewall 55a may be inclined toward the flat portion 50d. The recess portion 55 is made by the shape of a caulking jig when the electrode terminal 50 is installed in the through hole 53 of the battery can 51 by the caulking method.

Preferably, the thickness of the inner flange portion 50c may decrease as the distance from the body portion 50a of the electrode terminal 50 increases.

According to another aspect, the rivet gasket 54 may include an outer gasket 54a interposed between the outer flange portion 50b and the outer surface 52a of the bottom 52 of the battery can 51, and an inner gasket 54b interposed between the inner flange portion 50c and the inner surface 52b of the bottom 52 of the battery can 51. Preferably, the outer gasket 54a and the inner gasket 54b are divided based on the outer surface 52a of the bottom of the battery can 51.

The thickness of the outer gasket 54a and the inner gasket 54b may differ depending on the location. Preferably, in the area of the inner gasket 54b, the thickness of the area interposed between the inner edge 56 of the through hole 53 connected to the inner surface 52b of the bottom 52 of the battery can 51 and the inner flange portion 50c may be relatively small. Preferably, there may be a minimum thickness point in the gasket area interposed between the inner edge 56 of the through hole 53 and the inner flange portion 50c. In addition, the inner edge 56 of the through hole 53 may include a facing surface 57 that faces the inner flange portion 50c.

Meanwhile, the top and bottom of the inner wall of the through hole 53 that is perpendicular to the bottom 52 of the battery can 51 are corner-cut to form a tapered surface toward the electrode terminal 50. However, the top and/or bottom of the inner wall of the through hole 53 may be transformed into a smooth curved surface with curvature. In this case, the stress applied to the rivet gasket 54 near the top and/or bottom of the inner wall of the through hole 53 may be more relieved.

Preferably, the inner gasket 54b may extend longer than the inner flange portion 50c while forming an angle of 0o to 60o with the inner surface 52b of the bottom 52 of the battery can 51.

In another aspect, the height H1 of the flat portion 50d based on the inner surface 52b of the bottom 52 of the battery can 51 may be equal to or greater than the height H2 of the end of the inner gasket 54b. In addition, the height H1 of the flat portion 50d may be equal to or greater than the height H3 of the end of the inner flange portion 50c based on the inner surface 52b of the bottom 52 of the battery can 51. Here, the height H2 is the maximum height of the end of the inner gasket 54b measured based on the inner surface 52b. In addition, the height H3 is the maximum height of the end of the inner flange portion 50c measured based on the inner surface 52b.

When the height parameters H1, H2 and H3 satisfy the above conditions, it is possible to prevent the inner flange portion 50c and the inner gasket 54b from interfering with other components.

Preferably, the height H3 of the inner flange portion 50c may be 0.5 mm to 3.0 mm. If the height H3 of the inner flange portion 50c is less than 0.5 mm, sufficient sealing properties are not ensured. In addition, when the height H3 of the inner flange portion 50c exceeds 3 mm, the inner space of the battery can 51 that can be occupied by the electrode assembly 71 is reduced.

Preferably, the height H4 of the electrode terminal 50 may be 1.5 mm to 7 mm. The height H4 of the electrode terminal 50 corresponds to the distance from the lower surface of the outer flange portion 50b to the flat portion 50d. If the height H4 of the electrode terminal 50 is less than 1.5 mm, it is difficult to increase the height of the inner flange portion 50c to the extent that sealing properties can be secured due to the thickness of the bottom 52 of the battery can 51. For reference, the thickness of the bottom 52 of the battery can 51 is about 0.5 mm to 1 mm. In addition, when the height H4 of the electrode terminal 50 exceeds 7 mm, the inner space of the battery can 51 that can be occupied by the electrode assembly 71 is reduced and the cell height is increased, and the energy density per unit volume is lowered by that much. When H3 and H4 satisfy the above numerical ranges, the sealing property of the electrode terminal 50 may be sufficiently secured without reducing the space inside the battery can 51. Most preferably, the height H4 of the electrode terminal 50 may be 4 mm to 7 mm.

In another aspect, the height H5 of the outer flange portion 50b based on the outer surface 52a of the bottom 52 of the battery can 51 may be 0.8 mm or more. If the height H5 of the outer flange portion 50b is less than 0.8 mm, the outer flange portion 50b may be deformed when the electrode terminal 50 is riveted. The thickness of the outer gasket 54a is 0.3 mm or more in consideration of insulation and sealing properties. Considering the thickness of the outer gasket 54a, if the height of the outer flange portion 50b is smaller than 0.8 mm, the thickness of the outer flange portion 50b becomes thinner to a level that it is difficult to secure sufficient mechanical rigidity. In particular, it is more serious when the electrode terminal 50 is made of aluminum. Meanwhile, the height of the outer flange portion 50b may be appropriately set in consideration of the space margin of the upper portion of the cell. In one example, the height of the outer flange portion 50b may be set to 2 mm or less, or 3 mm or less, or 4 mm or less, but the present disclosure is not limited thereto.

In another aspect, at least a part of the outer gasket 54a may be exposed to the outside of the outer flange portion 50b of the electrode terminal 50. The purpose of exposing the outer gasket 54a is to insulate the electrode terminal 50 and the outer surface 52a having the opposite polarity to the electrode terminal 50 from each other. For electrical insulation of the electrode terminal 50 and the outer surface 52a, the exposure width G of outer gasket 54a may be 0.1 mm to 1 mm. If the exposure width G is less than 0.1 mm, the electrical insulation of the electrode terminal 50 and the outer surface 52a on the plane may be broken when a high C-rate charge/discharge of 300 A or more is performed. In addition, if the exposure width G is greater than 1 mm, the electrical insulating effect is not further increased, but rather the area of the outer surface 52a used as a negative electrode area is reduced, so the contact area of a component (e.g., bus bar) used for connection is reduced.

In another aspect, the radius R1 from the center of the body portion 50a to the edge of the outer flange portion 50b may be 10% to 70% based on the radius R2 of the bottom 52 of the battery can 51.

When R1 becomes small, the welding space becomes insufficient when welding the component (bus bar) used to connect the electrode terminal 50. In addition, when R1 becomes large, the welding space decreases when welding the component (bus bar) for connection to the outer surface 52a of the bottom 52 of the battery can 51 except for the electrode terminal 50.

If the ratio R1/R2 is adjusted between 10% and 70%, it is possible to properly secure the welding space for the electrode terminal 50 and the outer surface 52a of the bottom 52 of the battery can 51.

In addition, the radius R3 from the center of the body portion 50a of the electrode terminal 50 to the edge of the flat portion 50d may be 4% to 30% based on the radius R2 of the bottom 52 of the battery can 51.

When R3 becomes small, the welding space becomes insufficient when laser-welding the first current collector plate 79 to the flat portion 50d of the electrode terminal 50, and the welding area of the electrode terminal 50 decreases, which may increase the contact resistance. In addition, R3 should be smaller than R1, and when R3 becomes larger, the thickness of the inner flange portion 50c becomes thinner, so that the strength of the inner flange portion 50c pressing the rivet gasket 54 is weakened, which may deteriorate the sealing ability of the rivet gasket 54.

When R3/R2 is adjusted between 4% and 30%, the welding area of the flat portion 50d of the electrode terminal 50 and the first current collector plate 79 is sufficiently secured to facilitate the welding process and reduce the contact resistance in the welding area, and it is possible to prevent deterioration of the sealing ability of the rivet gasket 54.

According to an embodiment of the present disclosure, the riveting structure of the electrode terminal 50 may be formed using a caulking jig that moves up and down. First, a preform (not shown) of the electrode terminal 50 is inserted by interposing the rivet gasket 54 in the through hole 53 formed in the bottom 52 of the battery can 51. The preform refers to an electrode terminal before riveting.

Next, the caulking jig is inserted into the inner space of battery can 51. The caulking jig has a groove and a protrusion corresponding to the final shape of the electrode terminal 50 on the surface opposite the preform in order to form the electrode terminal 50 by riveting the preform.

Next, the caulking jig is moved to the lower portion to press-form the upper portion of the preform, thereby transforming the preform into a riveted electrode terminal 50.

While the preform is pressed by the caulking jig, the outer gasket 54a interposed between the outer flange portion 50b and the outer surface 52a of the bottom 52 of the battery can 51 is elastically compressed and its thickness decreases. In addition, as the area of the inner gasket 54b interposed between the inner edge 56 of the through hole 53 and the preform is elastically compressed by the inner flange portion 50c, the thickness is further reduced than other areas. In particular, the area in which the thickness of the inner gasket 54b is intensively reduced is indicated by the dotted circle in FIG. 7. Accordingly, sealability and hermeticity between the riveted electrode terminal 50 and the battery can 51 is significantly improved.

Preferably, the rivet gasket 54 is compressed sufficiently to secure a desired sealing strength without being physically damaged in the process of riveting the preform.

Preferably, the compression ratio of the rivet gasket 54 may be 30% to 90%. The minimum compression ratio corresponds to a minimum compression level to ensure the sealing (sealability) of the electrode terminal 50. The maximum compression ratio corresponds to a maximum compression level that can be achieved without physically damaging the rivet gasket 54.

In one example, when the rivet gasket 54 is made of polybutylene terephthalate, the rivet gasket 54 preferably has a compression ratio of 50% or more at the point where it is compressed to a minimum thickness. The compression ratio is the ratio of the thickness change before and after compression to the thickness before compression.

Preferably, the compression ratio is determined for the inner gasket 54b. That is, the compression ratio may be defined as a ratio for the thickness change of the maximum compression point compared to the thickness of the inner gasket 54b before compression. The same applies to the following. The thickness of the inner gasket 54b before compression may be uniform, and there may be a maximum compression point near the inner edge 56.

In another example, when the rivet gasket 54 is made of polyfluoroethylene, it is desirable that the rivet gasket 54 has a compression ratio of 60% or more at the point where it is compressed to a minimum thickness. Preferably, the compression ratio is determined for the inner gasket 54b.

In another example, if the rivet gasket 54 is made of polypropylene, it is desirable that the rivet gasket 54 has a compression ratio of 60% or more at the point where it is compressed to a minimum thickness. Preferably, the compression ratio is determined for the inner gasket 54b.

Preferably, by vertically moving the caulking jig at least twice or more, the pressure forming may be performed to the upper portion of the preform step by step. That is, the preform may be deformed several times by pressure forming step by step. At this time, the pressure applied to the caulking jig may be increased step by step. In this way, it is possible to prevent the rivet gasket 54 from being damaged during the caulking process by dispersing the stress applied to the preform several times. In particular, when the inner gasket 54b interposed between the inner edge 56 of the through hole 53 and the preform is compressed intensively by the inner flange portion 50c, the damage to the rivet gasket 54 is minimized.

After the pressure forming of the preform using the caulking jig is completed, if the caulking jig is separated from the battery can 51, a riveting structure of the electrode terminal 50 according to an embodiment of the present disclosure may be obtained as shown in FIGS. 6 and 7.

According to the above-described embodiment, the caulking jig press-forms the upper portion of the preform through vertical movement inside the battery can 51. In some cases, a rotary rotating jig used in the prior art may be used for the press-forming of the preform.

However, the rotary rotating jig rotates in a state inclined at a predetermined angle with respect to the central axis of the battery can 51. Therefore, the rotary rotating jig with a large rotation radius may interfere with the inner wall of the battery can 51. In addition, when the depth of the battery can 51 is large, the length of the rotary rotating jig is also increased by that much. In this case, as the rotation radius of the end of the rotary rotating jig increases, the press-forming of the preform may not be performed properly. Therefore, press-forming using the caulking jig is more effective than a method using a rotary rotating jig.

Meanwhile, the structure of the electrode terminal 50 may have various structures depending on the design of the preform and/or the caulking jig and/or the rivet gasket 54 and the magnitude of the pressure applied to the preform during the caulking process.

FIG. 8 is a partially enlarged cross-sectional view showing the structure of an electrode terminal 50' according to another embodiment of the present disclosure.

Referring to FIG. 8, the electrode terminal 50' according to another embodiment has a riveted structure such that the inner flange portion 50c is substantially parallel to the inner surface 52b of the bottom 52 of the battery can 51. Accordingly, the angle formed by the surface of the inner flange portion 50c opposite to the inner surface 52b of the bottom 52 of the battery can 51 with respect to the inner surface 52b is substantially close to 0, and the height H3 of the inner flange portion 53c is greater than the height H2 of the inner gasket 54b. In addition, the inner edge 56 of the through hole 53 has an arc shape with a predetermined curvature (arc: a portion defined by two points on a circumference or curve). Further, the sidewall 55a of the flat portion 50d has a structure inclined toward the flat portion 50d.

Preferably, the thickness of the inner gasket 54b may gradually decrease toward the upper portion, decrease to the minimum thickness near the end of the inner flange portion 53c, and then increase slightly toward the uppermost end. The compression structure of the inner gasket 54b may further improve the sealability of the electrode terminal 50'. The compression ratio of the inner gasket 54b may be calculated at the minimum thickness point near the end of the inner flange portion 53c.

In the cylindrical secondary battery 70 illustrated in FIG. 5, the electrode terminal 50 may be replaced with the electrode terminal 50' illustrated in FIG. 8. By the electrode terminals 50, 50' described above, the space efficiency in the battery can 51 may be increased. Accordingly, it is possible to lower the internal resistance of the cylindrical secondary battery 70 including the same and increase the energy density. The electrode terminals 50, 50' are improved to enlarge the sectional area of the current path. Accordingly, in the cylindrical secondary battery 70 including the same, the problem of internal heat generated during rapid charging is solved.

In addition, the cylindrical secondary battery 70 to which the riveting structure of the electrode terminals 50, 50' is applied may perform electrical wiring in one direction. As described with reference to FIG. 5, in the cylindrical secondary battery 70 according to the embodiment of the present disclosure, the cap plate 74a of the sealing body 74 has no polarity. Instead, the second current collector plate 78 is connected to the battery can 51, so that the outer surface 52a of the bottom 52 of the battery can 51 has the opposite polarity to the electrode terminal 50. Accordingly, in connecting the plurality of cylindrical secondary batteries 70, both the positive electrode and the negative electrode may be connected in one direction, thereby simplifying the connection structure. Therefore, when a plurality of cylindrical secondary batteries 70 are to be connected in series and/or in parallel for the fabrication of a battery pack, wiring such as connection of a bus bar may be performed at the top of the cylindrical secondary battery 70 using the outer surface 52a of the bottom 52 of the battery can 51 and the electrode terminal 50. Through this, energy density may be improved by increasing the number of secondary batteries that can be mounted in the same space, and electrical wiring may be easily performed. Therefore, space efficiency is good and the efficiency of electrical wiring is high, so there is a significant improvement effect in the assembly process of an electric vehicle and the assembly and maintenance and repair of a battery pack.

Moreover, since electrical wiring may be performed on the side where the outer surface 52a of the bottom 52 of the battery can 51 and the electrode terminal 50 are located and no electrical wiring is placed on the cap plate 74a located on the opposite side, the effect of the vent notch 77 formed on the cap plate 74a may be maximized. In addition, if a heat sink, a cooling plate, a tray, or the like is placed on the cap plate 74a, the purpose of assembly and cooling may be effectively achieved regardless of the electrical wiring connection portion. Moreover, by assembling the vent notch 77 to be placed downward, the gas discharged from the inside of the secondary battery is discharged downward. Since secondary batteries are usually mounted at a lower position than occupants of a vehicle such as an EV, if gas is discharged upward from the secondary battery, it may harm the occupants. The cylindrical secondary battery 70 of the present disclosure may effectively discharge the high-pressure gas inside the secondary battery and is safe since it is irrelevant to the electrical wiring connection portion at an upper side. Furthermore, when the vent notch 77 ruptures to discharge gas, the gas is discharged downward and does not harm the occupants, thereby greatly improving the safety.

Preferably, the riveting structure of the electrode terminal 50, 50' according to the embodiments of the present disclosure described above may be applied to a cylindrical secondary battery having a form factor greater than 21700. Recently, as the cylindrical secondary battery is applied to an electric vehicle, the form factor of the cylindrical secondary battery is increasing compared to the conventional 18650 and 21700. An increase in the form factor leads to an increase in energy density, an increase in safety against thermal runaway, and an improvement in cooling efficiency.

Preferably, the cylindrical secondary battery 70 may be, for example, a cylindrical secondary battery having a form factor ratio (defined as a value obtained by dividing the diameter of a cylindrical secondary battery by height, that is, a ratio of diameter (Φ) to height h) greater than about 0.4. Such a secondary battery is suitable, for example, as a high-output, high-capacity secondary battery for a HEV.

The cylindrical battery cell according to an embodiment of the present disclosure may be, for example, a 46110 cell, a 48750 cell, a 48110 cell, a 48800 cell, or a 46800 cell.

The secondary battery according to an embodiment of the present disclosure may be a cylindrical secondary battery having an approximately cylindrical shape, whose diameter is about 46 mm, height is about 110 mm, and form factor ratio is about 0.418

The secondary battery according to another embodiment may be a cylindrical secondary battery having an approximately cylindrical shape, whose diameter is about 48 mm, height is about 75 mm, and form factor ratio is about 0.640.

The secondary battery according to another embodiment may be a cylindrical secondary battery having an approximately cylindrical shape, whose diameter is about 48 mm, height is about 110 mm, and form factor ratio is about 0.436

The secondary battery according to another embodiment may be a cylindrical secondary battery having an approximately cylindrical shape, whose diameter is about 48 mm, height is about 80 mm, and form factor ratio is about 0.600.

The secondary battery according to another embodiment may be a cylindrical secondary battery having an approximately cylindrical shape, whose diameter is about 46 mm, height is about 80 mm, and form factor ratio is about 0.575.

In the related art, secondary batteries having a form factor ratio of about 0.4 or less have been used. That is, in the related art, for example, a 18650 cell, a 21700 cell, etc. have been used. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

The cylindrical secondary battery 70 according to the present disclosure includes the improved electrode terminal structure (riveting) and the current collection structure (connection of the uncoated portion and the current collector plate) as described above, and as described below, specific means to implement these structures and bring a better improvement function (the segmental structure of the current collector for bending the uncoated portion, and the components such as the insulator designed to enable laser welding of the first current collector plate and the electrode terminal in a state connected to the electrode assembly, and the second current collector plate), so it may be manufactured as a cylindrical secondary battery with a form factor greater than 21700.

Referring back to FIG. 5, the cylindrical secondary battery 70 may further include an insulator 85 interposed between the closed portion of the battery can 51 and the first current collector plate 79. The insulator 85 may be interposed between the first current collector plate 79 and the inner surface 52b of the bottom 52 of the battery can 51, and between the inner circumference 51a of the sidewall of the battery can 51 and the electrode assembly 71.

Preferably, the insulator 85 may include a welding hole 85a exposing the flat portion 50d of the electrode terminal 50 toward the first current collector plate 79. In addition, the welding hole 85a may expose the inner flange portion 50c and the inner gasket 54b together with the flat portion 50d of the electrode terminal. Preferably the welding hole 85a does not block the winding center hole 80. Therefore, when a large amount of gas is generated due to abnormality of the secondary battery, the movement of the gas to move toward the cap plate 74a through the winding center hole 80 is not hindered. Accordingly, when a large amount of gas is generated, the vent notch 77 may smoothly function to control the internal pressure of the battery. Also, since the cap plate 74a includes the welding hole 85a, the laser beam may reach the first current collector plate 79 through the welding hole 85a in the step of welding the first current collector plate 79 to the electrode terminal 50.

Preferably, the insulator 85 may cover at least the surface of the first current collector plate 79 and one (upper) edge of the electrode assembly 71. Through this, the first current collector plate 79 having a polarity different from that of the battery can 51 and the uncoated portion 73 of the first electrode plate may be prevented from contacting each other.

Preferably, the insulator 85 is made of an insulating resin, and may include an upper plate 85b and a side sleeve 85c. In one example, the upper plate 85b and the side sleeve 85c may be integrally formed by injection molding. Alternatively, the side sleeve 85c may be replaced with an insulation tape or the like. The insulation tape may cover the outer edge of the first current collector plate 79 together with the uncoated portion 73 of the first electrode plate exposed through the outer circumference of the electrode assembly 71.

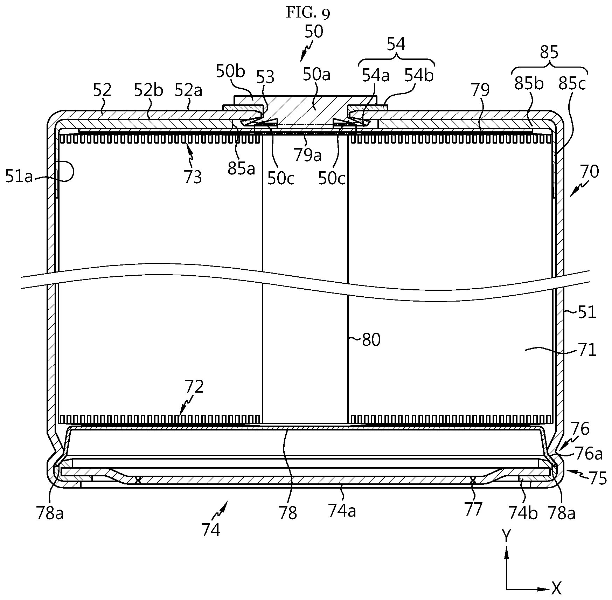

Preferably, the insulator 85 and the inner surface 52b of the bottom 52 of the battery can 51 may be in close contact with each other as shown in FIG. 9. FIG. 9 is a cross-sectional view of a cylindrical secondary battery according to another embodiment of the present disclosure, taken along the longitudinal direction Y.

Here, 'close contact' means that there is no space (gap) that can be observed with the naked eye. In order to eliminate the space (gap), the distance from the inner surface 52b of the bottom 52 of the battery can 51 to the flat portion 50d of the electrode terminal 50 may be equal to or slightly less than the thickness of the insulator 85.

Referring back to FIG. 5, preferably, the uncoated portion 72, 73 of the first electrode plate and/or the second electrode plate may be bent in the radial direction of the electrode assembly 71, for example, from the outer circumference toward the core, so that bent surfaces are formed on the upper and lower portions of the electrode assembly 71. In addition, the second current collector plate 78 may be welded to the bent surface formed as the uncoated portion 72 of the second electrode plate is bent, and the first current collector plate 79 may be welded to the bent surface formed as the uncoated portion 73 of the first electrode plate is bent. Since each of the uncoated portions 72, 73 is bent, the space occupied by them is reduced, thereby improving energy density. In addition, the increase in the binding area between each uncoated portion 72, 73 and each current collector plate 78, 79 may bring about an effect of improving the binding force and reducing the resistance. This structure is particularly suitable for high-power secondary batteries.

In addition, in order to relieve stress generated when the uncoated portions 72, 73 are bent, the first electrode plate and/or the second electrode plate may have an improved structure different from that of the conventional electrode plate (see FIG. 1).

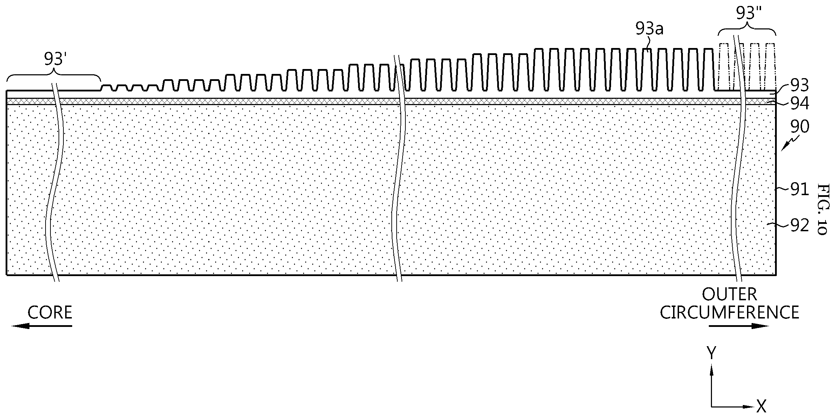

FIG. 10 is a plan view exemplarity showing an electrode plate 90 structure according to a preferred embodiment of the present disclosure.

Referring to FIG. 10, the electrode plate 90 includes a current collector 91 having a sheet shape and made of a conductive material foil, an active material layer 92 formed on at least one surface of the current collector 91, and an uncoated portion 93 not coated with an active material at a long side end of the current collector 91.

Preferably, the uncoated portion 93 may include a plurality of notched segments 93a. At least a partial area of the uncoated portion 93 is divided into a plurality of segments 93a. The plurality of segments 93a may form a plurality of groups, and the segments 93a included in each group may have the same height (length in the Y direction) and/or width (length in the X direction) and/or pitch. The number of segments 93a belonging to each group may be increased or decreased than shown. The segment 93a has a shape of a geometric figure in which at least one straight line and/or at least one curve are combined. Preferably, the segment 93a may have a trapezoidal shape, and may be deformed as desired into a quadrangle, a parallelogram, a semicircle, or a semi-ellipse.

Preferably, the height of the segment 93a may be increased step by step along one direction parallel to the winding direction of the electrode assembly, for example from the core toward the outer circumference. In addition, the core-side uncoated portion 93' adjacent to the core may not include the segment 93a, and the height of the core-side uncoated portion 93' may be smaller than that of the other area of the uncoated portion. In addition, the outer circumferential uncoated portion 93" adjacent to the outer circumference may not include the segment 93a, and the height of the outer circumferential uncoated portion 93" may be smaller than that of the other area of the uncoated portion.

Optionally, the electrode plate 90 may include an insulating coating layer 94 covering the boundary between the active material layer 92 and the uncoated portion 93. The insulating coating layer 94 may include an insulating polymer resin, and may optionally further include an inorganic filler. The insulating coating layer 94 prevents the end of the active material layer 92 from coming into contact with the active material layer having an opposite polarity on the opposite side through the separator, and serves to structurally support the bending of the segment 93a. To this end, when the electrode plate 90 is wound into the electrode assembly, it is preferable that at least a part of the insulating coating layer 94 is exposed from the separator to the outside.

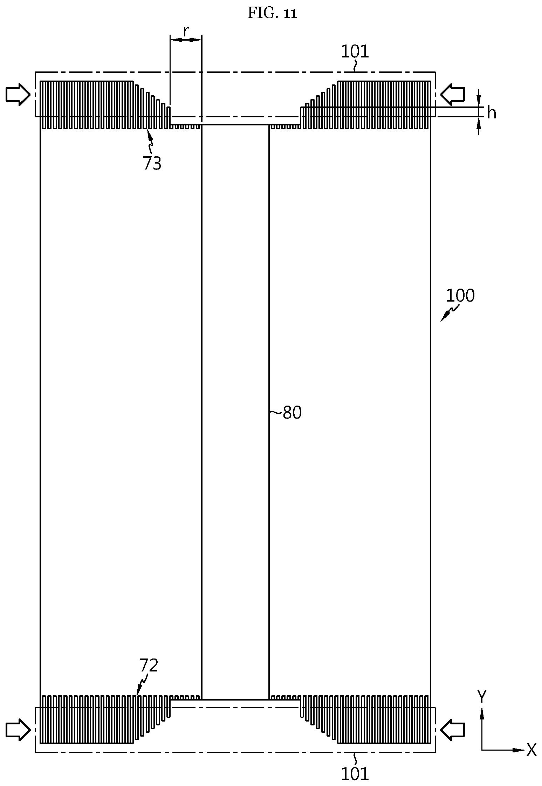

FIG. 11 is a cross-sectional view of the electrode assembly 100 in which the segmental structure of the uncoated portion of the electrode plate 90 according to an embodiment of the present disclosure is applied to the first electrode plate and the second electrode plate, taken along the longitudinal direction Y.

Referring to FIG. 11, the electrode assembly 100 may be fabricated by the winding method described with reference to FIG. 2. For convenience of description, the protruding structure of the uncoated portions 72, 73 extending out of the separator is illustrated in detail, and the illustration of the winding structure of the first electrode plate, the second electrode plate and the separator is omitted. The uncoated portion 72 protruding downwardly extends from the second electrode plate, and the uncoated portion 73 protruding upward extends from the first electrode plate.

The patterns in which the heights of the uncoated portions 72, 73 change are schematically illustrated. That is, the heights of the uncoated portions 72, 73 may vary irregularly depending on the position where the cross-section is cut. For example, when the side portion of the trapezoidal segment 93a (FIG. 10) is cut, the height of the uncoated portion in the cross-section is lower than the height of the segment 93a. Accordingly, it should be understood that the heights of the uncoated portions 72, 73 shown in the drawing showing the cross-section of the electrode assembly 100 correspond to the average of the heights of the uncoated portion included in each winding turn.

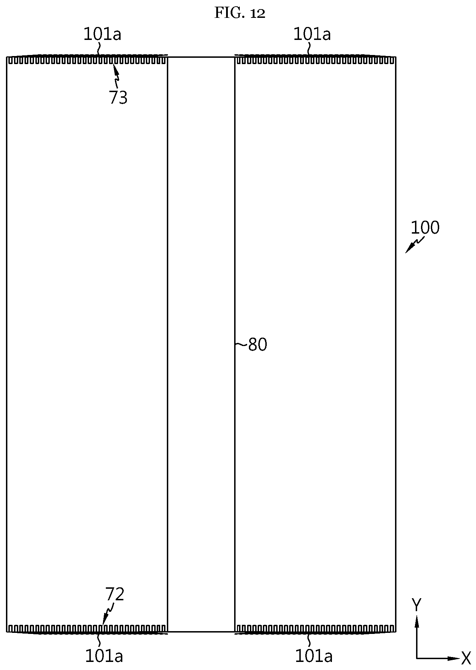

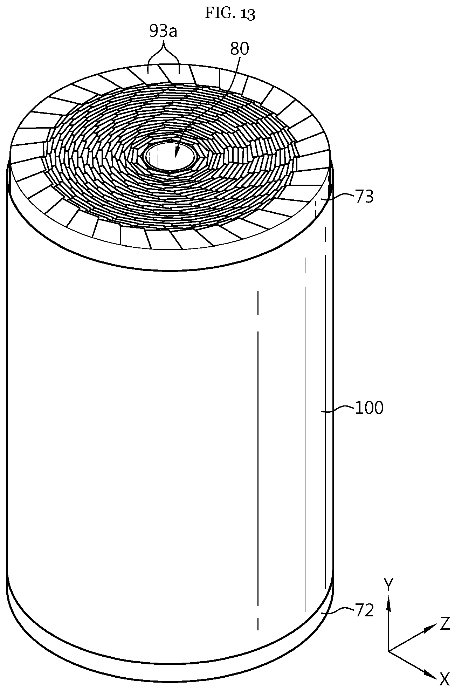

The uncoated portions 72, 73 may be bent. The bent portion 101 in FIG. 11 is indicated by a dotted line box. For example, the uncoated portions 72, 73 may be bent from the outer circumference toward the core along the arrow direction of FIG. 11. FIGS. 12 and 13 show the electrode assembly 100 in which the uncoated portions 72, 73 are bent from the outer circumference toward the core along the radial direction of the electrode assembly 100 as above.

Referring to FIGS. 11 and 12, when the uncoated portions 72, 73 are bent, the segments 93a (FIG. 10) adjacent in the radius direction overlap each other in multiple layers along the radial direction, so that a bent surface 101a is formed on the upper and lower portions of the electrode assembly 100. At this time, the core-side uncoated portion 93' (FIG. 10) has a low height and is not bent, and the height h of the segment bent at the innermost side is equal to or less than the radial length (r) of the winding area formed by the core-side uncoated portion 93' without a segment structure. Therefore, the winding center hole 80 of the electrode assembly 100 is not closed by the bent segments. If the winding center hole 80 is not closed, there is no difficulty in the electrolyte injection process and the electrolyte injection efficiency is improved. In addition, since the path to which the laser beam is irradiated during laser welding through the winding center hole 80 is not blocked, welding of the electrode terminal 50 and the first current collector plate 79 may be easily performed.

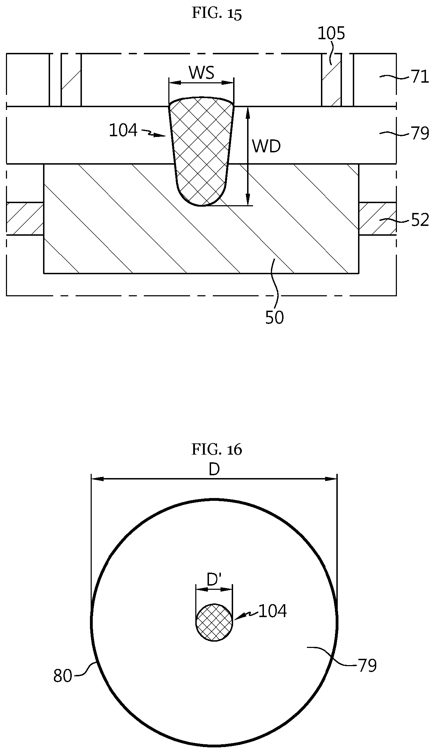

Next, a method of fabricating the cylindrical secondary battery 70 will be described in detail with reference to FIGS. 5 and 14 together. FIG. 14 is a diagram showing a process of coupling the electrode terminal and the first current collector plate of the cylindrical secondary battery by laser welding according to an embodiment of the present disclosure. FIG. 15 is a partial enlarged view of the dotted line box of FIG. 14, and is also a cross-sectional view of the electrode terminal and the first current collector plate that are laser-welded.

First, the electrode assembly 71 is provided according to the method and structure described with reference to FIG. 5 and the like. The electrode assembly 71 may be the electrode assembly 100 described with reference to FIG. 13 and the like.

Next, the first current collector plate 79 is connected to the uncoated portion 73 of the first electrode plate of the electrode assembly 71. For example, they may be connected by welding method. Laser welding, resistance welding, ultrasonic welding, or the like are possible to weld the first current collector plate 79 to the uncoated portion 73 of the first electrode plate. When the first current collector plate 79 is made of aluminum, laser welding or ultrasonic welding is preferable. An insulator 85 may be added to the top of the first current collector plate 79 connected to the uncoated portion 73 of the first electrode plate.

The second current collector plate 78 is connected to the uncoated portion 72 of the second electrode plate of the electrode assembly 71. For example, they may be connected by welding method. Laser welding, resistance welding, ultrasonic welding, or the like are also possible for welding the second current collector plate 78 to the uncoated portion 72 of the second electrode plate.

Next, the electrode terminal 50 is formed and prepared on the battery can 51 according to the method and structure described above. The electrode assembly 71 is inserted into the battery can 51 through the open portion of the battery can 51 so that the first current collector plate 79 connected to the uncoated portion 73 of the first electrode plate of the electrode assembly 71 is oriented toward the bottom 52 of the battery can 51.

Next, as shown in FIG. 14, the first current collector plate 79 is laser-welded to the electrode terminal 50 using a laser welding device 102. For convenience of illustration in FIG. 14, the shape of the electrode terminal 50 is schematically illustrated, and illustration of other components such as components around the electrode terminal 50, for example, the rivet gasket 54 and the insulator 85, is omitted. The laser welding device 102 is also schematically shown.

Preferably, the first current collector plate 79 is connected to the uncoated portion 73 of the first electrode plate, then is downwardly inserted into the battery can 51 having the bottom 52 at a lower side so that the open portion is provided at an upper side, and is connected to the inner surface of the electrode terminal 50 formed on the bottom 52 of the battery can 51 through laser welding by irradiating the laser beam 103 from the top. The laser beam 103 is irradiated into the winding center hole 80 along the longitudinal direction of the winding center hole 80.

As such, in the present disclosure, laser welding is performed with the open portion of the battery can 51 open while the electrode assembly 71 is inserted through the open portion of the battery can 51. Laser welding is used to connect the first current collector plate 79 to the electrode terminal 50. During laser welding, the laser beam 103 may reach the welding area of the first current collector plate 79 through the winding center hole 80 of the electrode assembly 71. When the first current collector plate 79 is welded to the flat portion 50d of the electrode terminal 50, the electrode terminal 50 may support the welding area of the first current collector plate 79. In addition, since the flat portion 50d of the electrode terminal 50 has a wide area, a wide welding area may also be secured. Accordingly, the internal resistance of the cylindrical secondary battery 70 may be lowered by lowering the contact resistance of the welding region. The face-to-face welding structure of the riveted electrode terminal 50 and the first current collector plate 79 is very useful for rapid charging. This is because the current density per unit area can be lowered in the cross-section in the direction along which the current flows, so that the amount of heat generated in the current path can be lowered compared to the prior art.

The laser beam 103 passes through the winding center hole 80 of the electrode assembly 71 from the upper part of the electrode assembly 71 and the battery can 51 and directly reaches the surface of the first current collector plate 79 to be welded downward. The laser welding device 102 may include an optical system that may include a laser source (a laser beam source) and optical components such as a collimator, a lens, a mirror, or the like to focus the laser from the laser source into a laser beam 103 of a predetermined spot diameter and irradiate the laser beam to an object to be welded, and a system for inputting a welding atmosphere gas and discharging by-products. The spot diameter refers to a diameter at the focal location. Although welding may be performed in air, it may be desirable to at least partially inject an inert gas such as nitrogen gas (N2) or argon gas (Ar), so it is preferable to include a welding atmosphere gas feed system including an inert gas supply unit. In addition, it is preferable to include a by-product discharge system including a dust collector for suctioning and removing the welding fume so as to remove the welding fume.

Referring to FIG. 15, the first current collector plate 79 is welded to the electrode terminal 50 by allowing the laser beam 103 to form a laser welding portion 104 in a welding area including the contact surface of the first current collector plate 79 and the electrode terminal 50. Of course, it is also possible to turn the bottom 52 of the battery can 51 to be oriented upward so that the laser beam 103 is irradiated upward from the open portion of the battery can 51. Even in this case, the key is to irradiate that the laser beam 103 such that the laser beam 103 passes through the winding center hole 80. Since the laser beam 103 does not pass through the battery can 51 or the outer surface of the electrode terminal 50 formed on the battery can 51, a welding bead or welding spot is not formed on the outer surface of the cylindrical secondary battery 70, so the outer surface is not uneven. Accordingly, it is advantageous to ensure a connection effect between the cylindrical secondary battery 70 and the bus bar component when performing electrical wiring for serial and/or parallel connection of the cylindrical secondary batteries 70.

Since the laser beam 103 is incident from the surface of the first current collector plate 79 exposed to the inner side of the winding center hole 80 toward the electrode terminal 50 therebelow, the laser welding portion 104 is formed from one side of the first current collector plate 79 oriented toward the inner side of the winding center hole 80 toward the electrode terminal 50 in the coupling area of the first current collector plate 79 and the electrode terminal 50 as shown in FIG. 15. In the laser welding portion 104, the width WS of the portion exposed to the surface of the first current collector plate 79, the depth WD of the laser welding portion 104, and the aspect ratio thereof may be managed as design factors.

In the fabricating method according to the present disclosure, it is preferable that the laser beam 103 does not deviate from the winding center hole 80. Through this, the laser welding portion 104 may be located in the overlapping area of the winding center hole 80, the first current collector plate 79 and the electrode terminal 50. If the laser beam 103 does not deviate from the winding center hole 80, it is possible to prevent damage to the components around the welding object, for example, the separator located close to the winding center hole 80 of the electrode assembly 71. Also, even if the laser beam 103 does not deviate from the winding center hole 80, if the heat transferred to the object to be welded spreads to the periphery and is transferred to the separator, the separator is damaged. In addition, if by-products or metal fragments generated by laser welding splash toward the separator, the separator may be damaged. The welding process is controlled so that such separator damage does not occur.

The laser welding portion 104 is formed in the welding area of the first current collector plate 79. By adjusting the depth WD of the laser welding portion 104, the laser welding portion 104 may not be exposed to the outside through the electrode terminal 50. Therefore, the outer surface of the welding area of the electrode terminal 50, that is, the surface to which a component such as a bus bar will be further connected, such as the top of the part of the electrode terminal 50 exposed to the outside of the battery can 51, may be a smooth surface, and it is advantageous to ensure the connection effect and energy transfer efficiency by maintaining good contact with the bus bar when being connected to the bus bar.

In the secondary battery 70 manufactured by the fabricating method according to the present disclosure, the first current collector plate 79 may be welded to the electrode terminal 50 through the laser welding method, and the laser welding portion 104 may be provided on the contact surface of the first current collector plate 79 and the electrode terminal 50, the laser welding portion 104 may be located in the overlapping area where the winding center hole 80, the first current collector plate 79 and the electrode terminal 50 overlap each other, and the outer surface of the welding area of the electrode terminal 50 may be a smooth surface. The fact that the outer surface of the welding area is a smooth surface means that when the first current collector plate 79 and the electrode terminal 50 are welded together by the laser beam 103, the laser welding portion 104 is formed only on one side opposite to the bottom 52 of the battery can 51. That is, the laser welding portion 104 may be observed only inside the battery can 51, that is, only inside the cylindrical secondary battery 70, and the laser welding portion 104 is not exposed even to the outer surface of the electrode terminal 50 beyond the one surface opposite to the bottom 52 of the battery can 51. The outer surface of the electrode terminal 50 may still maintain the state before the first current collector plate 79 is welded, that is, the smooth surface state.

The diameter D of the winding center hole 80 may be 2 mm or more and 8 mm or less. The smaller the diameter D of the winding center hole 80 is, the more advantageous it is to utilize the inner space of the battery can 51, but since the winding core is used, the diameter D of the winding center hole 80 cannot be set to 0. In addition, the winding center hole 80 is a passage of movement of an electrolyte when the electrolyte is injected, so it must be of a predetermined size or more to achieve smooth electrolyte impregnation. Therefore, it is desirable that the diameter D of the winding center hole 80 should be 2 mm or more at the level of the allowable winding process. If the diameter D of the winding center hole 80 exceeds 8 mm, the internal space of the battery can 51 is used inefficiently, which is not desirable in terms of energy density.

The optical system of the laser welding device 102 is configured so that the laser beam 103 does not deviate from the winding center hole 80. The jelly-roll type electrode assembly included in the large battery also has a lengthened winding center hole. For example, if the cylindrical secondary battery 70 is manufactured with a form factor larger than 21700, the height of the cylindrical secondary battery 70 may be 70 mm or more, approximately 75 mm or more, and in that case, the length of the winding center hole 80 is also 60 mm or more, which is longer than that of a conventional small cylindrical secondary battery. To couple the first current collector plate 79 to the electrode terminal 50 at the bottom 52 of the battery can 51 by welding, focusing on the first current collector plate 79 must be good, and damage to the electrode assembly 71 during the welding process must be prevented. Although the laser beam 103 has advantages of monochromaticity, straightness, high brightness, focusing speed, and high energy intensity, a process margin is required to align the laser beam 103 with the winding center hole 80. Also, even after alignment, the position of the winding center hole 80 may be changed due to a slight vibration or the like. In addition, the diameter of the laser beam at one end of the winding center hole 80, where the laser beam 103 arrives first, differs from the diameter of the laser beam at the other end of the winding center hole 80 near the portion where the laser beam 103 is incident on the first current collector plate 79. Therefore, so that the laser beam 103 does not deviate from the winding center hole 80 while passing through the winding center hole 80, the laser beam 103 must be irradiated while securing a predetermined interference margin between the laser beam 103 and the winding center hole 80.

In addition, if the laser beam 103 is emitted and irradiated using a focusing lens that focuses the laser beam 103 on the first current collector plate 79, the focal depth of the focusing lens must be greater than the length of the winding center hole 80. The laser light focused by the focusing lens has the smallest diameter at the focal location, and the diameter increases as it goes away from the focal point. The focal depth refers to a length of the region in which the diameter of the laser beam does not deviate significantly from the focal diameter before and after the focal plane (the first current collector plate 79). Preferably, the focal depth of the focusing lens should be greater than the height of the electrode assembly 71. More preferably, the focal depth of the focusing lens should be greater than the height of the battery can 51.

When the focal depth has a value smaller than the height of the electrode assembly 71, the diameter of the laser beam may be increased before the laser beam reaches the welding position so that the laser beam may be irradiated to the electrode assembly 71 out of the winding center hole 80, and accordingly, the electrode assembly 71 may be interfered or damaged. Since the height of the cylindrical secondary battery 70 may be about 75 mm, 80 mm, 110 mm or more, the focal depth of the focusing lens is preferably about 60 mm or more. The focal depth depends on the focal distance (the distance from the focusing lens to the welding position), the wavelength of the laser beam, the diameter of the laser beam incident on the focusing lens, the light quality factor, and the like. Since the laser beam 103 should be irradiated from a position spaced apart from the top of the battery can 51 as much as possible to secure a working space, the longer the focal depth of the focusing lens, the better. For example, the focal depth of the focusing lens may be 2 to 3 times greater than the height of the electrode assembly 71. Therefore, the laser welding device 102 may include a focusing lens with a long focal depth. By making the magnitude of the focal depth more preferably larger than the height of the battery can 51, the diameter is not enlarged before the laser beam reaches the first current collector plate 79, thereby preventing the laser beam from being irradiated to and interfered with the components around the winding center hole 80.

In the present disclosure, by using the laser welding device 102 with an improved optical system, it is possible to irradiate the laser beam 103 to the first current collector plate 79 exposed to the inside of the winding center hole 80 while preventing damage to the assembly 71 on the first current collector plate 79 placed at the bottom of the winding center hole 80, which is longer than the conventional one. According to the present disclosure, the first current collector plate 79 may be welded to the electrode terminal 50 while solving the defect problem that may occur due to laser welding, so it is possible to satisfy the demand for a high-power, low-resistance battery in the technical field to which the present disclosure belongs.

The laser welding used in the present disclosure does not require direct contact between the laser welding device 102 and the first current collector plate 79, but may realize the purpose of welding the current collector plate 79 and the electrode terminal 50 only by irradiating the laser beam 103 emitted from the laser welding device 102 onto the first current collector plate 79, so it is possible to prevent component deformation due to contact pressure welding, and it is advantageous for guaranteeing the quality and performance of the cylindrical secondary battery 70 and improving production yield.

When the first current collector plate 79 and the electrode terminal 50 are made of aluminum, welding using a welding rod is inefficient. Because the welding rod wears quickly, the welding rod must be replaced frequently and the welding device must be adjusted, which not only affects the production efficiency but also increases the cost of the welding rod. Since a welding rod is used by applying pressure, it causes deformation of the battery can 51 or the object to be welded, which not only affects quality and performance but also affects production yield. It is also undesirable to weld the first current collector plate 79 and the electrode terminal 50 by ultrasonic welding. A long horn that can be inserted into the winding center hole 80 is required, the horn is easily broken, burrs are generated a lot, and it is difficult to check the presence or absence of a non-coupled area. There is also a problem due to foreign substances generated during welding.

In the present disclosure, by applying laser welding, it is advantageous not only to guarantee quality and performance, but also to improve production yield by preventing deformation caused by contact pressure welding such as resistance welding. Since the laser welding portion 104 is formed inside the secondary battery 70 and not formed on the outer surface, the outer surface of the electrode terminal 50, which can be connected to the bus bar or the like, is made as a smooth surface, which is advantageous to ensure the connection effect with other components and energy transfer efficiency. In addition, since there is no need to replace the welding rod or horn, it is advantageous to improve production efficiency, reduce production cost, and reduce manufacturing process time. It has higher bonding strength compared to ultrasonic welding and may secure uniformity of welding performance and quality compared to resistance welding.

The laser welding portion 104 may include one or more welding beads. The welding bead refers to a metal to be welded by one-time welding (the laser beam 103 passes once) and may also be called a welding spot. The size, shape, position, and overlap of the welding bead may vary depending on the welding conditions. The laser welding portion 104 includes not only welding beads that are formed separately one by one and thus distinguished from each other, but also the cases in which the welding beads are partially overlapped to form a single mass. The welding method using the laser beam 103 may be wobble welding, spot welding, weaving (hatching) welding, scan welding, or the like, which may be selected and applied as necessary by a person with ordinary knowledge in the technical field to which the present disclosure belongs.

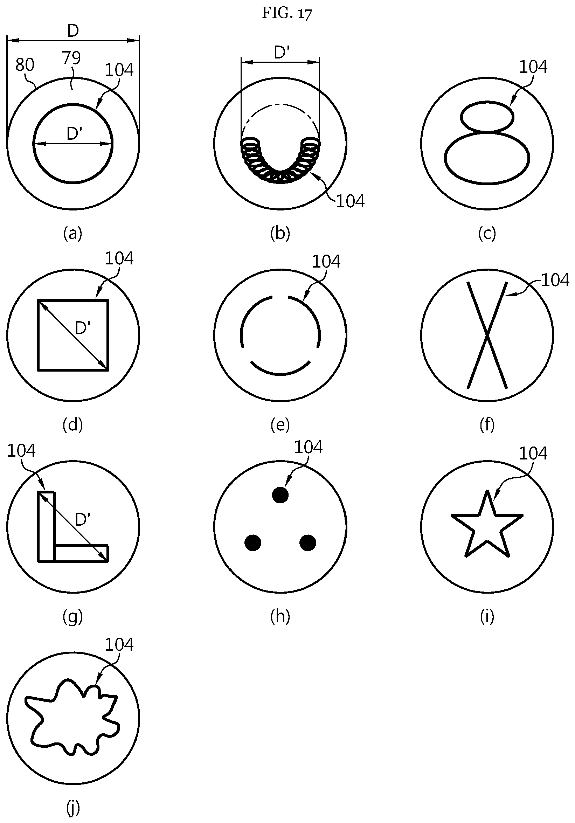

FIGS. 16 and 17 are views showing various surface shapes of the laser welding portion of the present disclosure. The laser welding portion 104 is not limited to a special shape as long as it can maintain bonding strength. However, since the laser welding portion 104 has to be formed inside the winding center hole 80 with a diameter D of 2 mm or more and 8 mm or less, it is desirable to select a shape that is advantageous to indicate a desired bonding strength while being formed at a position that does not deviate from the winding center hole 80 and in a size that does not deviate from the winding center hole 80. In FIGS. 16 and 17, the winding center hole 80 and its diameter D are also indicated for reference. D may be the diameter of the winding core.

Referring first to FIG. 16, the laser welding portion 104 may be an overlapping overlay type of the welding beads for the center portion of the winding center hole 80. For example, the welding bead has a circle shape by spot welding. The overlapping overlay type is obtained by forming several welding beads at the same point to overlap each other. The circular welding beads may have the same diameter or different diameters. That is, it may be a shape in which several concentric circles having the same diameter or different diameters are overlapped. The overlapping overlay type may be implemented by irradiating the laser beam 103 at the same location as a low output pulse mode. If a high-power laser beam is irradiated at once, it may cause overwelding. For example, the object to be welded may be perforated, and a back bead may be generated. Here, the back bead refers to a phenomenon in which a color change or welding bead occurs on a surface opposite to the surface on which laser welding is performed. This problem may be prevented by the low-power laser beam 103 used for safety. There is also the advantage of being able to control the bonding strength while adjusting the number of irradiation of the laser beam 103. Since there is no need to move the laser beam 103, the risk of the laser beam 103 escaping from the narrow winding center hole 80 is small, and the laser welding portion 104 may be stably formed in the center portion of the winding center hole 80, so it is possible to form a welding portion with ideal precision and high reliability and minimize welding defects.

Several circular welding beads by spot welding may be overlapped to form one continuous line. For example, when the laser beam 103 emitted from the laser welding device 102 is irradiated while moving along a linear path on the first current collector plate 79 in the winding center hole 80, the laser welding portion 104 may be configured in a linear shape. The line may be a straight line, a curved line, a bent line, a spiral line (e.g., spiral, helical, vortical, etc.). The movement of the laser beam 103 may be implemented by moving the laser beam 103 with the first current collector plate 79 being fixed, or may be implemented by fixing the laser beam 103 and setting a worktable on which the battery can 51 on which the first current collector plate 79 is placed is to be placed on, for example, the X-Y table of the NC control, and then moving the battery can 51 so that the laser beam 103 is relatively moved.

The laser welding portion 104 may form a continuous closed straight line or a closed curve by matching the starting point and the ending point of the irradiated laser beam 103. In addition, the laser welding portion 104 may not match the starting point and the end point of the irradiated laser beam 103. Also, the laser welding portion 104 may form an open curve. For example, based on quadrants, one quadrant may be in the form of an open structure. For example, it may be a C shape or the like.

Referring to FIG. 17a, the laser welding portion 104 may be a ring-shaped circle type centering on the center portion of the winding center hole 80. Since it is circular, it is preferable because the force can be dispersed uniformly even if the force is applied in various directions.

Referring to FIG. 17b, the laser welding portion 104 may be a wobble circle type centering on the center portion of the winding center hole 80. This is also preferable because the force can be uniformly distributed even when the force is applied in various directions.

Referring to FIG. 17c, the laser welding portion 104 may be an 8 type in which two circles are circumscribed.

FIGS. 17a and 17c are examples of a closed curve, and FIG. 17b is an example that includes closed curves while the starting point and the ending point of the irradiated laser beam 103 do not match.

Referring to FIG. 17d, the laser welding portion 104 may be a rectangular border type centering on the center portion of the winding center hole 80. FIG. 17d is an example of a closed straight line.

Polygonal border types such as triangular and pentagonal border types are also possible, in addition to the rectangular border type. When forming a circular or polygonal laser welding portion, in the case where the starting point and the ending point of the irradiated laser beam match, if it is a problem to form a welding bead deeper than the periphery in the corresponding area, it is possible to form an incomplete circular or polygonal shape without completely matching the starting point and the ending point.

The laser welding portion 104 may have an arc shape as shown in FIG. 17e. The arcs may be formed at a radially symmetrical position with respect to the center portion of the winding center hole 80. The arcs symmetrically formed are preferable because the force can be uniformly distributed even when the force is applied in several directions. The number of arcs is not particularly limited and may preferably be 2 to 4. For example, three arcs may be arranged at the same distance from each other while forming an arc shape with a length corresponding to an angle range of 50o to 80o based on the center portion of the winding center hole 80.

The laser welding portion 104 may be an X-type in which two lines intersect at the center portion of the winding center hole 80 as shown in FIG. 17f, or may be an L-type in which two lines meet at a point as shown in FIG. 17g.

Several circular welding beads by spot welding may be formed separately without overlapping other welding beads. In such a case, the laser welding portion 104 may be a multi-spot type in which spots are formed in radially symmetrical positions with respect to the center portion of the winding center hole 80, as shown in FIG. 17h. The welding beads formed symmetrically are preferable because the force can be uniformly distributed even when the force is applied in several directions. The number of circular spot welding beads may be 2 or more. For example, the number of circular spot welding beads may be 2, 3, 4, 5, 6, or 8, or may be set to any number not less than 2 according to actual demand. In the illustrated example, the number is three. They may be arranged at equal intervals from each other. For example, the welding beads may be arranged at every 120o with respect to the center portion of the winding center hole 80.

The laser beam 103 may pass through one point twice or more while moving in a weaving manner without passing one point only once. In such a case, as shown in FIGS. 17i and 17j, the laser welding portion 104 may be centered on the center portion of the winding center hole 80 and have a polygonal regular or irregular outer circumference, and the welding bead may fill inside the outer circumference.

As such, the laser welding portion 104 is not limited to a special shape as long as it can maintain bonding strength, and may have various shapes that can be implemented with the laser beam 103 inside the winding center hole 80.

Regarding the bonding strength, the tensile force of the joint between the first current collector plate 79 and the electrode terminal 50 by the laser welding portion 104 is 2 kgf or more, preferably 3 kgf or more and 15 kgf or less, more preferably 5 kgf or more and 15 kgf or less. The tensile force is the force applied perpendicular to the joint surface. It can be converted to the tensile strength by multiplying the size of the surface on which the force acts. When the tensile force is 2 kgf or more, preferably 3 kgf or more, when using the cylindrical secondary battery 70, the performance of the secondary battery is not affected, and the first current collector plate 79 is not detached from the electrode terminal 50 by vibration or pressure of equipment generated during the process. The tensile force at the joint between the first current collector plate 79 and the electrode terminal 50 may be at least 2 kgf or more, or 3 kgf or more, or 5 kgf or more, or 6 kgf or more, or 7 kgf or more, or 8 kgf or more, or 9 kgf or more, or 10 kgf or more. It is desirable to increase the tensile force as much as possible within the allowable range when selecting the best welding method.

Since the bonding strength in terms of tensile strength is also related to the area and depth WD (FIG. 15) of the laser welding portion 104, the bonding strength may be adjusted by adjusting the area and depth WD of the laser welding portion 104. As shown in the cross section of FIG. 15, the welding bead should not exist only on the surface, but should be formed on the contact surface of two members to be joined by welding, and has a three-dimensional shape with a thickness. The depth WD of the laser welding portion 104 includes the thickness of this welding bead. The depth WD of the laser welding portion 104 may be adjusted by the output, the irradiation time, and the like of the laser beam 103. If the output of the laser beam 103 increases, the depth increases, and as the irradiation time becomes longer, the depth increases. The output and irradiation time of the laser beam 103 may be adjusted so that the welding bead is not so deep to be exposed to the outer surface of the electrode terminal 50 while having an appropriate bonding strength. In practice, the thickness range of the first current collector plate 79 and the electrode terminal 50 is set, so the depth WD of the laser beam 103, which can be adjusted at the level to prevent overwelding, is somewhat limited. Adjusting the area of the laser welding portion 104 makes the process window wider. The area of the laser welding portion 104 is also related to the width WS of the laser welding portion 104, but can be managed with a design factor of the converted diameter D' of the laser welding portion 104 as suggested in the present disclosure.

The converted diameter D' of the laser welding portion 104 is the diameter of an imaginary circle that circumscribes the laser welding portion 104 in the portion exposed to the surface of the object to be welded, that is, the laser welding portion 104 exposed to the surface of the first current collector plate 79. Accordingly, the converted diameter D' may represent a distance between a pair of welding points located at the furthest distance from each other among laser welding points constituting the welding beads included in the laser welding portion 104. The converted diameter D' suggested to be managed in the present disclosure is different from the diameter (D= 2*(SA/π)0.5) of the circle when the area (SA) of the welding portion displayed on the surface of the object to be welded is converted to the area (πr2) of the circle. The latter represents information about the size of the welding portion or the area occupied by the welding portion on a plane, and is a management factor for a percentage of the area occupied by the welding portion to the entire area of the given area. On the other hand, the converted diameter D' is not only about the size of the welding portion, but also includes information about the shape of the welding portion, and thus is a management factor considering how far the welding points in the welding portion are apart even in the welding portion of the same area, namely indicating how much the portion is spread out within a given area. In the present disclosure, since the laser welding portion 104 should be formed in the winding center hole 80 and the laser welding portion 104 should be managed so as not to deviate from the winding center hole 80, even a welding portion having a narrow area should not be spread widely. Therefore, it is desirable to manage it with a converted diameter D'.

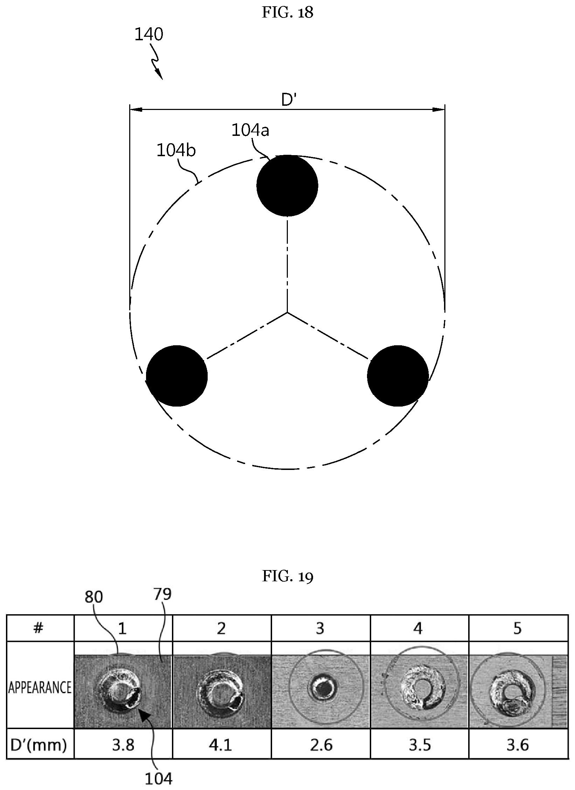

FIG. 18 is a diagram for explaining a method of calculating a converted diameter of the laser welding portion in the case of three-point welding.

When laser welding forms the laser welding portion 104 of a multi-spot type like FIG. 17h among the various types shown in FIG. 17, for example a 3-point welding type, the converted diameter D' of the laser welding portion 104 becomes the diameter of the imaginary circle 104b circumscribing the three welding points 104a.

To help understanding of the converted diameter D', the converted diameter D' of the laser welding portion 104 is indicated also in FIG. 16 and FIGS. 17a, 17b, 17d, and 17g.

In the present disclosure, the converted diameter D' of the laser welding portion 104 may be 0.15D to 0.90D. That is, the converted diameter of the laser welding portion 104 may be formed in the range of approximately 15% to 90% of the diameter D of the winding center hole 80. It is very difficult to realize the converted diameter D' of 0.4D or more using the known laser welding method. This is because it is very difficult to focus the laser beam on the bottom of the winding center hole 80, which is longer than the conventional one, without affecting the periphery of the winding center hole 80. That is, in terms of manufacturing large cells, an improved optical system that ensures that the laser beam does not deviate from the winding center hole 80 with a diameter D of 2 mm or more and 8 mm or less while passing through the winding center hole 80, which may have a length of 60 mm or more, is required or other implementation means are required. The laser welding device 102 according to the present disclosure may implement the converted diameter D' of 0.4D or more by including an improved optical system in which a narrow and long winding center hole 80 is considered in advance. The larger the converted diameter D' is, the more advantageous it is in terms of bonding strength. However, if the converted diameter D' is set to 0.9D or more, there is a risk of damage to the components around the winding center hole 80 due to minute vibration or shaking during the process or other unexpected accidents. Therefore, of course, the converted diameter D' is preferably set to 0.9D or less, even if it can be implemented to be larger. If the converted diameter D' is small, sufficient bonding strength cannot be obtained. Therefore, it is desirable that the converted diameter D' is at least 0.15D.

As mentioned above, the diameter D of the winding center hole 80 may be 2 mm or more and 8 mm or less. The converted diameter D' of the laser welding portion 104 exposed on the surface of the first current collector plate 79 may be 2 mm or more. The area SA of the laser welding portion 104 shown on the surface of the first current collector plate 79 is considered to be the area (π(D'/2)2) of a circle with the converted diameter D'.

The diameter of the flat portion 50d of the electrode terminal 50 may be determined in consideration of the bonding strength between the first current collector plate 79 and the electrode terminal 50. The diameter of the flat portion 50d of the electrode terminal 50 is twice larger than the radius R3 from the center of the body portion 50a of the electrode terminal 50 to the edge of the flat portion 50d described with reference to FIG. 8, and may be 3 mm to 14 mm.

The flat portion 50d of the electrode terminal 50 corresponds to the weldable area. Therefore, the diameter of the weldable area in the electrode terminal 50 may be 3 mm to 14 mm. If the diameter of the weldable area is smaller than 3 mm, it is difficult to secure a laser welding portion with a converted diameter D' of 2 mm or more. If the diameter of the weldable area exceeds 14 mm, the diameter of the outer flange portion 50b of the electrode terminal 50 becomes too large, and it is difficult to sufficiently secure the area of the outer surface 52a of the bottom 52 of the battery can to be used as the negative electrode terminal.

Considering the converted diameter D' of the laser welding portion 104 and the diameter condition of the weldable area of the electrode terminal 50, it is preferable that the ratio of the area of the laser welding portion 104 exposed on the surface of the first current collector plate 79 to the area of the flat portion 50d of the electrode terminal 50 required to secure the tensile force of the welding portion of at least 2 kgf or more, preferably 3 kgf or more, is 2.04% (π12/π72) to 44.4% (π12/π1.52).

Referring back to FIG. 14, the step of forming the laser welding portion 104 may include the step of inserting the hollow tube 105 into the winding center hole 80 so that at least a part of the first current collector plate 79 is exposed in the inner hollow of the hollow tube 105.

At this time, the first current collector plate 79 may be compressed to the electrode terminal 50 by the hollow tube 105. The laser beam 103 emitted from the laser welding device 102 passes through the inner hollow of the hollow tube 105, so that the first current collector plate 79 may be welded to the electrode terminal 50.

The laser beam 103 may be focused on the first current collector plate 79 through an optical system such as expansion, reflection and focusing, and the laser beam 103 irradiated on the first current collector plate 79 may be heated from the first current collector plate 79, which is a welding target. Surface heat is diffused to the inside through heat conduction, and the pulse width, energy, peak power, and repetition frequency (pulse cycle) of the laser beam 103 are precisely controlled according to preset settings. The material is melted, vaporized and evaporated at the irradiation site by irradiation of the laser beam 103, and after the laser beam 103 passes, the corresponding molten site is solidified to form a welding bead. It is possible to control the laser beam 103 to move to a predetermined trajectory or position.

The bonding quality is good when bonding defects such as cracks and back beads are prevented and thermal deformation or spattering in the bonding area is suppressed. Such defects may occur due to the incidence of excessive heat. In the present disclosure, when heating the first current collector plate 79 with the laser beam 103, the mode of the laser beam 103 or the output of the laser beam 103 may be adjusted with time to change the heating area and the heating temperature, and the occurrence of spatter may be prevented by placing a temperature difference between the part where the laser beam 103 is intensively irradiated and the surrounding area or allowing full-scale melting after preheating. If a deep welding bead is formed with high energy from the beginning on the part where the laser beam 103 is intensively irradiated, there is a risk of formation of pores or spatter-like flying substances in the first current collector plate 79 due to the high welding heat. Accordingly, it is possible to prevent spatter from occurring by having a process for managing the welding heat, such as a preheating process. In addition, even if flying substances such as spatter are generated on the surface, the method of placing the temperature difference may also be performed to melt flying substances again, maintain in a molten state, and then solidify to become a part of the welding bead on the first current collector plate 79.

On the other hand, if the first current collector plate 79 is compressed onto the electrode terminal 50 by using the hollow tube 105, the welding defect caused by the insufficient joint between the first current collector plate 79 and the electrode terminal 50 is prevented, thereby increasing the quality and performance of the cylindrical secondary battery 70. On the other hand, the laser beam 103 and the electrode assembly 71 may be isolated to guide the laser beam 103, which may not only prevent the laser beam 103 from damaging the electrode assembly 71, but also may serve as a mask to prevent the laser beam 103 from being irradiated to locations other than the welding area. In this way, if the first current collector plate 79 is compressed using the hollow tube 105, the welding quality may be improved by applying a stronger pressure to the welding area.

The hollow tube 105 is an optional element. Also optionally, the length of the hollow tube 105 may be greater than the height of the electrode assembly 71 to ensure that the electrode assembly 71 and the laser beam 103 are separated through the hollow tube 105. For example, the length of the hollow tube 105 is greater than 60 mm. The outer diameter of the hollow tube 105 is smaller than the diameter D of the winding center hole 80. For example, the diameter D of the winding center hole 80 may be 80 mm and the outer diameter of the hollow tube 105 may be 60 mm. The inner diameter DI of the hollow tube 105 has a value obtained by subtracting the double of the wall thickness of the hollow tube 105 from the outer diameter. The wall thickness of the hollow tube 105 may be between 0.1 mm and 1 mm, for example.

The hollow tube 105 is, for example, a metal hollow tube. For example, the hollow tube 105 may be made of iron, nickel-plated iron, SUS, or aluminum alloy material. As another example, the hollow tube 105 may be made of a high-temperature-resistant non-metallic material. For example, it may be ceramic. The hollow tube 105 may also more effectively prevent the melts generated during the laser welding process, that is, spatter from entering the electrode assembly 71 to cause a short circuit.

During welding by the laser beam 103, the step of supplying an inert gas such as nitrogen gas or argon gas for removal of oxygen atmosphere through the space between the hollow tube 105 and the inner circumference of the winding center hole 80 may be performed. In order to more smoothly guide the inert gas onto the first current collector plate 79, the bottom of the hollow tube 105 may be spaced so that it is positioned above the top of the first current collector plate 79. As another example, at least one hole for gas entry/exit may be formed in the wall of the hollow tube 105 adjacent to the first current collector plate 79.

When the inert gas is supplied, the inner space of the inner hollow of the hollow tube 105 may be converted to inert gas atmosphere. Therefore, when the first current collector plate 79 and the electrode terminal 50 are made of aluminum, it is possible to prevent the aluminum molten by laser irradiation from reacting with oxygen to form welding fume in the form of fine dust powder.

In addition, while welding by the laser beam 103 is being performed, the step of removing the welding fume at one end of the winding center hole 80 opposite to the welding part may be performed. The inflow of the welding fume into the electrode assembly 71 may be primarily prevented by the hollow tube 105, and the generation of welding fume may be prevented when an inert gas atmosphere is formed during welding by supplying inert gas. However, if welding fumes are generated despite this configuration, product defects may be more reliably prevented by inhaling/removing them. Accordingly, the welding quality may be further improved.

The laser welding device 102 may be to weld the first current collector plate 79 to the electrode terminal 50 in a pulse mode or a continuous mode. In the continuous mode, the laser medium of the laser source is continuously excited to generate a continuous laser beam. In the pulse mode, the laser medium is excited in the form of pulses rather than continuously. In this mode, a temporally interrupted laser beam is generated (pulse beam). The duration, energy, and pulse cycle of this laser pulse may be adjusted. The mode may be predetermined in the design of the laser welding device 102 to have a specific operating mode. For example, the laser welding device 102 may irradiate the laser beam 103 with a pulse width of 100 ns to 2000 ns. When the first current collector plate 79 and the electrode terminal 50 are made of aluminum or aluminum alloy, it is desirable to irradiate a beam of a large output to the welding area because the thermal conductivity is high. Therefore, it may be desirable to perform welding with a pulse beam. When welding with a pulse beam, conditions such as pulse width and pulse cycle may be appropriately selected in consideration of the type of material, penetration depth or the like. Other welding conditions, such as spot diameter, processing speed, or the like may be appropriately selected according to the welding design such as the material of the first current collector plate 79 and the electrode terminal 50 to be joined, the width WS, the depth WD and the aspect ratio of the laser welding portion 104, or the like.

As for the laser source, carbon dioxide laser, argon laser, ruby laser that is a type of solid laser, YAG laser, fiber laser, etc. are known, and it is good to select an appropriate one according to the material and thickness of the object to be welded. In addition, the output may also be selected as an appropriate one according thereto. For example, a YAG laser having high bonding efficiency with metal and excellent processing performance is preferable. The laser beam 103 is selected so that there is little thermal deformation of the object to be welded or little deterioration of material properties.

The wavelength of the laser beam 103 is not particularly limited as long as efficient welding is possible. A green laser source (515 nm) is preferable because the welding possible output range is high. When a green laser source is used, an optical system may be configured by changing a lens for reducing a beam size (spot diameter). When the beam size is large, the influence on corrosion increases, and the aspect ratio of the laser welding portion 104 decreases, so that welding efficiency may decrease. An IR laser source (1070 nm) may also be used. Even if the weldable output range is smaller than that of the green laser source, a welding bead of an overlapping overlay type may be formed with a low output laser beam. Preferably, the laser welding portion 104 of the overlapping overlay type as shown in FIG. 16 may be formed by overlapping and irradiating a pulse dot type laser beam on the center portion of the winding center hole 80.

The wavelength of the laser beam 103 may be selected in consideration of the material of the metal terminal 50 and the first current collector plate 79 to be welded, but may be 1000 to 1500 nm, preferably 900 to 1350 nm, more preferably 1060 to 1080 nm. When the wavelength of the laser beam 103 is less than the above range, the weldable output range may be widened, but there is a problem in that it is difficult to reduce the size of the laser beam 103. In addition, when the wavelength of the laser beam 103 exceeds the above range, the weldable output range is narrow, and there is a high possibility of welding failure. Therefore, the wavelength of the laser beam 103 preferably satisfies the above range. In addition, the laser beam 103 having a wavelength of 400 nm to 600 nm may be used.

The laser welding device 102 may irradiate the laser beam 103 at a processing speed of 40 mm/s to 1000 mm/s. The processing speed refers to a movement speed of the laser beam 103 on the first current collector plate 79. The processing speed of the laser beam 103 may be important because the shape of the welding bead may vary depending on the processing speed. In the laser welding step of the present disclosure, the processing speed of the laser beam 103 may be 40 mm/s to 1000 mm/s, preferably 100 mm/s to 500 mm/s, more preferably 200 mm/s to 300 mm/s. If the processing speed of the laser beam 103 is less than the above range, there is a risk of back beads, and if it exceeds the above range, there is a problem that the bonding strength is lowered. Therefore, it is desirable that the processing speed of the laser beam 103 satisfies the above range.

The laser welding device 102 may be to irradiate the laser beam 103 with an output of 50 W to 4 kW. The output of the laser beam 103 may be managed as a design factor by converting it into 'line energy', which is the output value of the laser beam 103 for the processing speed of the laser beam 103. If the output of the laser beam 103 is less than the above range, there is a problem of lowering bonding strength, and if it exceeds the above range, there is a possibility that back beads may occur, so the output of the laser beam 103 preferably satisfies the above range. The output of the laser beam 103 may be 300 W to 500 W.

The spot diameter of the laser beam 103 may be 10 µm to 200 µm. When the spot diameter of the laser beam 103 exceeds 200 µm, the influence on corrosion increases and the aspect ratio of the laser welding portion 104 decreases, so that welding efficiency may decrease. In addition, when the size of the laser beam 103 is less than 10 µm, the welding area is small, so that sufficient bonding strength cannot be secured by one welding. Therefore, the spot diameter of the laser beam 103 preferably satisfies the above range. Preferably, the spot diameter of the laser beam 103 may be about 50 µm.

When irradiating the laser beam 103 having a spot diameter within the above range in a pulse dot method, one welding bead may be formed in a circle shape by spot welding as shown in FIG. 17h. The width WS (FIG. 15) of the spot welding bead having a circle shape is not smaller than 50 µm, may be, for example, 50 µm, 60 µm, 70 µm, 80 µm or 100 µm, or may be set to a value of any value not smaller than 50 µm according to actual demand. If the width is not smaller than 50 µm, it is advantageous to ensure the good welding effect of the first current collector plate 79 and the electrode terminal 50, and it is possible to prevent the width of the circular spot welding bead from being so small to affect the welding effect of the first current collector plate 79 and the electrode terminal 50.

The laser beam 103 may be a single mode or a multi mode. Representing energy distribution within a laser beam cross section is called a laser beam mode, and the laser welding device 102 may be predetermined in designing to have a specific mode. The output energy and application fields vary according to the laser beam mode, and the mode in use is distinguished through the shape of the welding bead. The spot diameter of the single-mode laser beam 103 may be 50 µm or less. The spot diameter of the multi-mode laser beam 103 may be 50 µm or more.

In the single mode, the energy distribution follows a Gaussian distribution and has one energy peak. In order to obtain a single mode, the output of the laser may be lost, but it is advantageous for very precise processing. When it is required to form the laser welding portion 104 finely in the present disclosure, the laser beam of a single mode may be used.

In the multi mode, two or more energy peaks are included in the energy distribution. Most high-power lasers have multi-mode beams. In order to obtain a single-mode beam from the multi-mode beam, the output energy is reduced by half. The multi mode has a larger spot diameter than the single mode when connected. Also, in the multi mode, the part to be heated in contact with the object to be welded is different from that of the single mode. By using these characteristics, welding quality or work efficiency may be further improved.

The laser welding device 102 may use a fiber laser. The wavelength of the laser beam 103 is 1070 nm, and scan-type welding may be possible. A commercial laser device with a maximum output of about 200 W in the pulse mode and about 700 W in the continuous mode may also be used. The commercial laser device has a beam size of about 30 µm, so it is easy to form a welding portion in a narrow area. It is also possible to perform the fabricating method of the present disclosure by configuring the laser welding device 102 that may make the maximum output larger than the above and have a smaller or larger beam size than the above.

Since the laser welding may be processed in a narrow area compared to resistance welding, it is advantageous to further reduce the diameter D of the winding center hole 80 and increase the height of the electrode assembly 71 to pursue an increase in the capacity of the secondary battery. In addition, compared to resistance welding, the laser welding does not limit the material of the object to be welded. The present disclosure does not arbitrarily select and apply laser welding among known resistance welding, ultrasonic welding, and laser welding. The present disclosure is an improvement on the positive electrode terminal 50. For the electrode assembly 71 having the winding center hole 80 with a long length, the technical task of connecting the positive electrode terminal 50 and the first current collector plate 79, which can be made of aluminum as the main material, inside the battery can 51, is not known prior to the present disclosure. Therefore, it is not easy for even a person with ordinary knowledge to connect the first current collector plate 79 and the positive electrode terminal 50 using laser welding. Even if laser welding is used, it is not possible to laser-weld the first current collector plate 79 and the positive electrode terminal 50 in the area overlapping the winding center hole 80 to have proper bonding strength while preventing damage to the components around the long winding center hole 80 and preventing the occurrence of spatter.

Hereinafter, an experimental example of the welding step in the fabricating method of the present disclosure will be described.

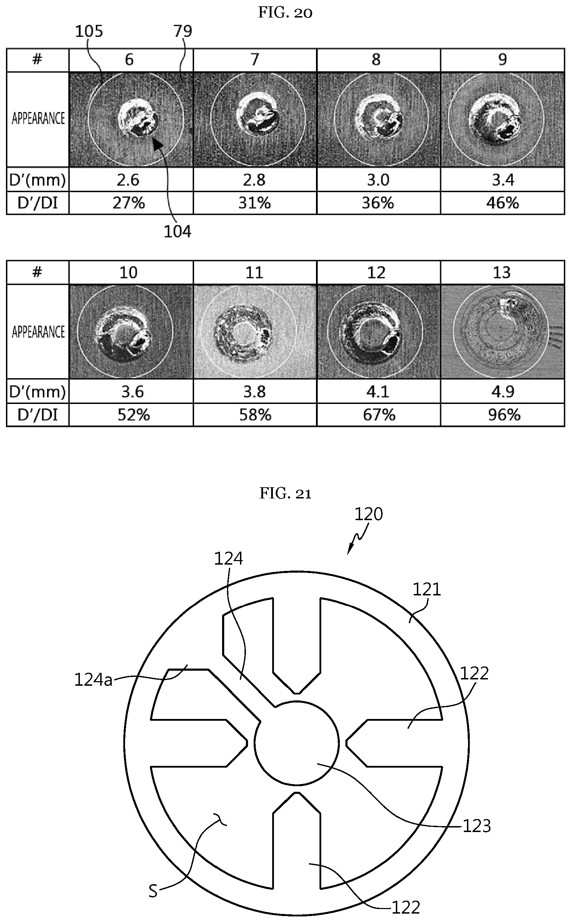

FIG. 19 is a view showing the appearance and converted diameter D' of the laser welding portion compared with the diameter of the winding center hole 80 of the electrode assembly 71. FIG. 20 is a view showing the appearance and converted diameter D' of the laser welding portion compared with the diameter of a hollow tube inserted into the winding center hole 80 of the electrode assembly71.

The diameter D of the winding center hole 80 was 8 mm. In the fabricating method according to the present disclosure, the surface appearance of the laser welding portion 104 formed on the first current collector plate 79 inside the winding center hole 80 is as shown in FIG. 19. Through the fabricating method according to the present disclosure, the laser welding portion 104 was successfully formed. Experimental example numbers (#) 1, 2, 4, 5 are the same circle type as in shown in FIG. 17a, and #3 is the overlapping overlay type. In each experimental example, the laser welding portion 104 was not exposed to the outer surface of the electrode terminal under the first current collector plate 79, and it was found that the first current collector plate 79 and the electrode terminal were firmly welded. In #1 to #5, the converted diameter D' of the laser welding portion 104 was 3.8 mm, 4.1 mm, 2.6 mm, 3.5 mm, and 3.6 mm, respectively, so the converted diameter D' became 0.325D to 0.5125D, and D' satisfied the condition of 0.15D to 0.90D. In addition, it could be seen that the laser welding portion 104 having the converted diameter D' of 2 mm or more could be successfully formed with the fabricating method according to the present disclosure.

The diameter D of the winding center hole 80 may be varied. The outer diameter and inner diameter of the hollow tube 105 may also be changed to fit the winding center hole 80 of various diameters D. The results of the laser welding using various hollow tubes 105 are shown in FIG. 20.

Referring to FIG. 20, the laser welding portion 104 is well formed in the inner hollow of the hollow tube 105 with a size smaller than the inner diameter DI of the hollow tube 105. The converted diameter D' of the laser welding portion 104 is arranged in increasing order from 2.6 mm of #6 to 4.9 mm of #13. In each experimental example, the inner diameter DI of the hollow tube 105 is different. In each experimental example, the converted diameter D'/the inner diameter DI of the hollow tube 105 is also arranged in the order of increasing from 27% to 96%. The inner diameter DI of the hollow tube 105 in #6 is 9.6 mm. The inner diameter DI of the hollow tube 105 in #13 is 5.1 mm.

Since the inner diameter DI of the hollow tube 105 is smaller than the diameter D of the winding center hole 80, in the experimental examples #6 to #13, where D'/DI is 27% to 96%, D'/D shows a changed range whose upper and lower limits have smaller values. For example, D'/D may represent a range of 30% to 94%. In this way, it is possible to satisfy the condition that D' is 0.15D to 0.90D while forming the laser welding portion 104 of various converted diameters D' with various hollow tubes 105.

In particular, when D'/DI is 96% as in #13, it indicates that the laser welding portion 104 is formed very close to the wall of the hollow tube 105, and it should be noted that the laser welding portion can be formed even in this case without damaging the electrode assembly around the winding center hole 80. Even in the case of using the hollow tube 105, it is possible to sufficiently achieve the condition that D' is 0.15D to 0.90D, that is, the condition that D'/D is in the range of 15% to 90%.

After completing the above laser welding step, the processes of assembling the sealing body 74, beading, crimping, injecting electrolyte, and sizing may be further performed. The process sequence may be changed as needed, and, for example, depending on the structure of the second current collector plate 78, the step of welding the second current collector plate 78 to the battery can 51 may also be performed.

The cylindrical secondary battery 70 according to the present disclosure includes a first current collector plate 79 and a second current collector plate 78. The first current collector plate 79 may have a structure that prevents the force from being concentrated in the coupling area between components even if an external shock and/or vibration is applied during use. The second current collector plate 78 not only has a structure capable of improving the coupling force of the coupling area with the battery can 51, but also improves the energy density of the cylindrical secondary battery 70. The first current collector plate 79 and the second current collector plate 78 have a structure that is easy to laser-weld the first current collector plate 79 to the electrode terminal 50.

Now, various embodiments of the first current collector plate 79 and the second current collector plate 78 will be described.

FIGS. 21 to 24 are views showing various surface shapes of the first current collector plate.

Referring to FIGS. 21 to 24, the first current collector plate 120 includes a rim portion 121, a first electrode tab coupling portion 122, and a terminal coupling portion 123. The rim portion 121, the first electrode tab coupling portion 122, and the terminal coupling portion 123 may all be in the same plane. That is, the first current collector plate 120 is an approximately plate-shaped member whose thickness is smaller than the horizontal or vertical length of the portion having a large area, and when the portion having a large area in the first current collector plate 120 is placed at the top or bottom of the electrode assembly 71, the entire first current collector plate 120 has a shape extending in parallel with the top or bottom surface of the electrode assembly 71. Also, the heights of the rim portion 121, the first electrode tab coupling portion 122 and the terminal coupling portion 123 have no difference in the first current collector plate 120. This planar structure does not occupy a lot of volume in the battery can 51, so space utilization is good.

The rim portion 121 may have a substantially rim shape in which an empty space S is formed in at least a part of the inner region. Although the drawings show only the case in which the rim portion 121 has an approximately circular rim shape, the present disclosure is not limited thereto. The rim portion 121 may have an approximately square rim shape or other shapes unlike the one illustrated.

The first electrode tab coupling portion 122 extends inward from the rim portion 121 and may be coupled to the uncoated portion 73 of the first electrode plate by welding. The terminal coupling portion 123 is spaced apart from the first electrode tab coupling portion 122 and is positioned on the inner side of the rim portion 121. The terminal coupling portion 123 may be a portion coupled to the positive electrode terminal 50 by laser welding as described above. The terminal coupling portion 123 may be located, for example, in the center portion of the inner space of the rim portion 121. The terminal coupling portion 123 may be disposed at a position corresponding to the winding center hole 80 of the electrode assembly 71. The size of the terminal coupling portion 123 may be larger than the diameter of the winding center hole 80. The laser welding portion 104 as described above may be formed on the terminal coupling portion 123.

The first electrode tab coupling portion 122 and the terminal coupling portion 123 are not directly connected, but are disposed to be spaced apart from each other and are connected by the rim portion 121. As such, since the first current collector plate 120 has a structure in which the first electrode tab coupling portion 122 and the terminal coupling portion 123 are not directly connected to each other, but connected through the rim portion 121, when shock and/or vibration occurs in the cylindrical secondary battery 70, the shock applied to the coupling area between the first electrode tab coupling portion 122 and the uncoated portion 73 of the first electrode plate and the coupling area between the terminal coupling portion 123 and the positive electrode terminal 50 may be distributed. Therefore, the first current collector plate 120 has the effect of minimizing or preventing damage to the welding part due to the external impact. The first current collector plate 120 has a structure in which stress can be concentrated on the connection portion of the rim portion 121 and the terminal coupling portion 123 when an external impact is applied. Since the connection portion is not an area in which the welding portion for coupling components is formed, it is possible to prevent the occurrence of product defects due to the damage of the welding portion caused by the external impact. As such, since the first current collector plate 120 has a structure that can prevent the force from being concentrated on the coupling area between components even when an external impact and/or vibration is applied during use, the performance of the cylindrical secondary battery 70 including the same is improved.

The first current collector plate 120 may further include a connection portion 124 extending inward from the rim portion 121 and connected to the terminal coupling portion 123. At least a part of the connection portion 124 may be formed to have a smaller width than that of the first electrode tab coupling portion 122. In this case, when the electric resistance increases in the connection portion 124 so that a current flows through the connection portion 124, a greater resistance is generated compared to other portions, and when an overcurrent occurs as a result, a part of the connection portion 124 may rupture to block the overcurrent. The width of the connection portion 124 may be adjusted to an appropriate level in consideration of such an overcurrent blocking function. At least a part of the connection portion 124 may be relatively narrow in width to enhance the current blocking function. For example, both sides of the connection portion 124 may be notched inward to have notching portions so that the width of the connection portion 124 is partially reduced. When the notching portion is provided, the electrical resistance in the region where the notching portion is formed is further increased, and the notching portion is melted and broken by resistance heating, so that the current is not passed. This makes it possible to quickly cut off the current when an overcurrent occurs.

The connection portion 124 may include a tapered portion 124a whose width is gradually narrowed from the inner surface of the rim portion 121 toward the terminal coupling portion 123. When the tapered portion 124a is included, the rigidity of the component may be improved at the connection portion between the connection portion 124 and the rim portion 121. If the notching portion is provided, the notching portion may be located closer to the tapered portion 124a than the terminal coupling portion 123. In this case, due to the structure of the tapered portion 124a whose width is gradually narrowed, the notching portion is located adjacent to the region having a large amount of heat, so that the overcurrent can be cut off more quickly.

A plurality of first electrode tab coupling portions 122 may be included in the first current collector plate 120. The plurality of first electrode tab coupling portions 122 may be disposed at equal intervals from each other along the circumferential direction. The plurality of first electrode tab coupling portions 122 may have the same length as each other. The terminal coupling portion 123 may be disposed to be surrounded by the plurality of first electrode tab coupling portions 122. The connection portion 124 may be positioned between a pair of first electrode tab coupling portions 122 adjacent to each other. In this case, the distance from the connection portion 124 to any one of the pair of first electrode tab coupling portions 122 along the rim portion 121 may be equal to the distance from the connection portion 124 to the other one of the pair of first electrode tab coupling portions 122 along the rim portion 121.

A plurality of connection portions 124 may be included. Each of the plurality of connection portions 124 may be disposed between the pair of first electrode tab coupling portions 122 adjacent to each other. The plurality of connection portions 124 may be disposed at equal intervals from each other along the circumferential direction.

As described above, in the case in which a plurality of first electrode tab coupling portions 122 and/or connection portions 124 are included, if the distance between the first electrode tab coupling portions 122 and/or the distance between the connection portions 124 and/or the distance between the first electrode tab coupling portion 122 and the connection portion 124 is uniformly formed, a current flowing from the first electrode tab coupling portion 122 toward the connection portion 124 or a current flowing from the connection portion 124 toward the first electrode tab coupling portion 122 may be smoothly formed.

In a state where the first electrode tab coupling portion 122 is seated on the bent surface of the uncoated portion 73 of the first electrode plate in the electrode assembly 71, welding may be performed on a predetermined region. That is, the first electrode tab coupling portion 122 may be coupled to a region in which a plurality of segments 93a (FIG. 12) overlap in multiple layers. The welding portion may be formed for each of the first electrode tab coupling portions 122. The welding portion may be formed to extend along an extension direction of the first electrode tab coupling portion 122.

When the cylindrical secondary battery is applied to a device such as a vehicle, an external shock and vibration may be frequently applied during use, which may cause damage to the coupling area for connection between components. The damage to this coupling area causes product failure. Alternatively, when the coupling area for connection is damaged but the connection is not completely blocked, even if the welding area is partially damaged and the coupling area between components is reduced, excessive heat may be generated due to the increase in resistance, or an internal short may occur due to component shape deformation. The cylindrical secondary battery 70 according to the present disclosure may solve the above problems by including the first current collector plate 120 as described above.

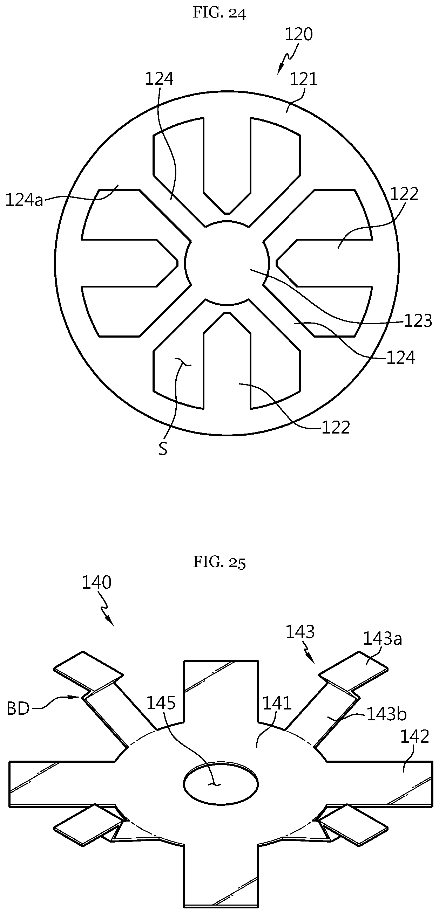

FIGS. 25 to 28 are views showing various surface shapes of the second current collector plate.

Referring to FIG. 25, the second current collector plate 140 includes at least one second electrode tab coupling portion 142 coupled to the uncoated portion 72 of the second electrode plate and at least one can coupling portion 143 electrically coupled to the beading part 76 on the inner surface of the battery can 51. The second electrode tab coupling portion 142 and the can coupling portion 143 may not be in the same plane. That is, the second current collector plate 140 is an approximately plate-shaped member whose thickness is smaller than the horizontal or vertical length of the portion having a large area, and when the portion having a large area in the second current collector plate 140 is placed on the bottom of the electrode assembly 71, there is a difference in height between the second electrode tab coupling portion 142 and the can coupling portion 143 in the second current collector plate 140. This three-dimensional structure secures the contact area between the second electrode tab coupling portion 142 and the uncoated portion 72 of the second electrode plate, while lowering the can coupling portion 143 to be fixed to the beading part 76 of the battery can 51, so that the bonding strength of the coupling area with the battery can 51 may be improved.

The center portion 141 of the second current collector plate 140 may have an approximately circular plate shape. The center portion 141 may optionally be coupled with the uncoated portion 72 of the second electrode plate. The center portion 141 may have a ring-shaped plate shape having a current collector plate hole 145 provided at its center.

The current collector plate hole 145 may be formed at a position corresponding to the winding center hole 80 of the electrode assembly 71 and may be circular. The winding center hole 80 and the current collector plate hole 145 communicating with each other may function as a passage for irradiating the laser beam 103 for welding the electrode terminal 50 and the positive electrode current collector plate 120. In addition, when a large amount of gas is generated due to abnormality of the secondary battery, the current collector plate hole 145 may also serve to quickly move the gas downward through the winding center hole 80.

The diameter of the current collector plate hole 145 may be 0.5D or more, preferably 0.7D or more, more preferably 1.0D or more, based on the diameter D of the winding center hole 80 of the electrode assembly 71. If the diameter of the current collector plate hole 145 is more than 0.5D or more and less than 1.0D, it is possible to prevent the separator or the electrode plate from being pushed out through the winding center hole 80 in a situation where the cell is vented. Preferably, if the diameter of the current collector plate hole 145 is set larger than the diameter D of the winding center hole 80 of the electrode assembly 71, when the laser beam 103 for welding the electrode terminal 50 and the positive electrode current collector plate 120 is irradiated, it becomes easier to secure space according to the insertion of the hollow tube 105.

The second current collector plate 140 may include a plurality of second electrode tab coupling portions 142 and can coupling portions 143. At this time, although not shown in the drawing, the plurality of can coupling portions 143 may be connected to each other to be integrally formed.

The second electrode tab coupling portion 142 may have a shape extending approximately radially from the center portion 141 of the second current collector plate 140 toward the sidewall of the battery can 51. The plurality of second electrode tab coupling portions 142 may be spaced apart from each other along the circumference of the center portion 141. By providing the plurality of second electrode tab coupling portion 142, the coupling area of the second electrode plate with the uncoated portion 72 may be increased. Accordingly, the coupling force between the uncoated portion 72 of the second electrode plate and the second electrode tab coupling portion 142 may be secured and electrical resistance may be reduced.

The second electrode tab coupling portion 142 may be welded to the uncoated portion 72 of the second electrode plate. While the second electrode tab coupling portion 142 is seated on the bent surface of the uncoated portion 72 of the second electrode plate in the electrode assembly 71, welding may be performed on a predetermined region. That is, the second electrode tab coupling portion 142 may be coupled to a region in which a plurality of segments 93a (FIG. 12) overlap in multiple layers. The welding portion may be formed for every second electrode tab coupling portion 142. The welding portion may be formed to extend along an extension direction of the second electrode tab coupling portion 142.

The plurality of can coupling portions 143 may be spaced apart from each other along the circumference of the center portion 141. The can coupling portion 143 may be coupled to the beading part 76 on the inner surface of the battery can 51. By the structure in which the second current collector plate 140 is coupled to the beading part 76 of the battery can 51 as above rather than the inner surface of the cylindrical part of the battery can 51, the distance between the second current collector plate 140 and the beading part 76 may be reduced. Accordingly, the dead space inside the battery can 51 is minimized, so that the energy density of the cylindrical secondary battery 70 may be improved.

The can coupling portion 143 may be compressed and fixed by the crimping part 114 of the battery can 51. The can coupling portion 143 may include a contact portion 143a coupled to the beading part 76 on the inner surface of the battery can 51 and a connection portion 143b connecting the second electrode tab coupling portion 142 to the contact portion 143a.

The contact portion 143a is coupled on the inner surface of the battery can 51. In the case where the beading part 76 is formed in the battery can 51, the contact portion 143a may be coupled onto the beading part 76. In this case, as described above, for stable contact and coupling, both the beading part 76 and the contact portion 143a may extend in a direction approximately parallel to the lower surface of the battery can 51, that is, in a direction approximately perpendicular to the sidewall of the battery can 51. That is, the contact portion 143a includes at least a part of a flat portion approximately parallel to the lower surface of the battery can 51.

As indicated in FIG. 25, the connection portion 143b may include at least one bending portion BD whose extension direction is switched between the center portion 141 and the contact portion 143a at least once. That is, the connection portion 143b may have a structure contracted and extended within a certain range, for example, a spring-like structure or a bellows-like structure. Meanwhile, the connection portion 143b may be elastically biased upward by the bending portion BD. Although the structure of the connection portion 143b has a height distribution of the electrode assembly 71 within a certain range, in the process of accommodating the electrode assembly 71 coupled with the second current collector plate 140 in the battery can 51, the contact portion 143a may be in close contact onto the beading part 76. In addition, according to the structure of the connection portion 143b, the shape may be more stably implemented during the sizing process. The sizing process is a compression process for reducing the height occupied by the beading part 76 of the battery can 51 in order to reduce the total height of the cylindrical secondary battery 70 in manufacturing the cylindrical secondary battery 70. In addition, the contractible and extensible structure of the connection portion 143b alleviates the shock caused by the movement of the electrode assembly 71 within a certain range even if vibration and/or impact occurs during use of the cylindrical secondary battery 70 so to move the electrode assembly 71 up and down.

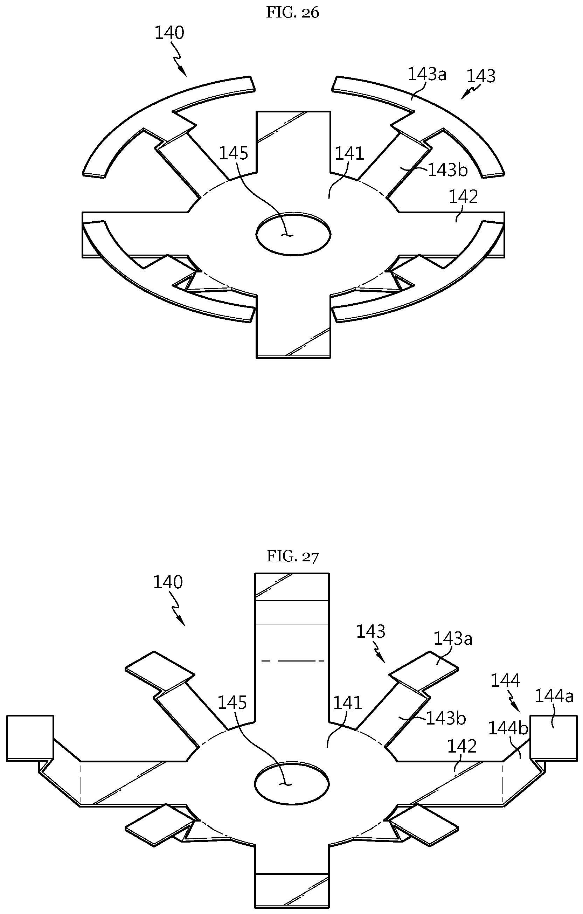

The shapes of the contact portion 143a and the connection portion 143b may be variously changed. The second current collector plate 140 of FIG. 25 and the second current collector plate 140 of FIG. 26 differ only in the shape of the contact portion 143a, and the structure of the second current collector plate 140 described above may be substantially identically applied to other parts.

Referring to FIG. 26, at least a part of the contact portion 143a may have a shape extending along the inner circumference of the battery can 51. For example, the contact portion 143a may have an arc shape extending along the beading part of the battery can 51. In addition, although not shown in the drawings, in order to maximize the contact area, in the second current collector plate 140, the sum of the extended lengths of the contact portions 143a of the at least one can coupling portion 143 may be approximately the same as the inner circumference of the battery can 51. In such an embodiment, it is possible to provide the effect of improving the coupling force and reducing the electrical resistance due to the maximization of the coupling area.

The contact portion 143a may be interposed and fixed between the beading part 76 of the battery can 51 and the sealing gasket 180. That is, in a state where the contact portion 143a is interposed between the beading part 76 of the battery can 51 and the sealing gasket 180, the contact portion 143a may be fixed due to the crimping force of the crimping part 114.

Referring to FIG. 27, the second current collector plate 140 of FIG. 27 is different from the second current collector plate 140 previously described with reference to FIG. 25 in that it further includes an additional can coupling portion 144, and the structure of the second current collector plate 140 of FIGS. 25 and 26 described above may be applied substantially identically.

The additional can coupling portion 144 extends from an end of the second electrode tab coupling portion 142 and is coupled on an inner surface of the battery can 51. Such an additional can coupling portion 144 is provided at an end of at least one of the plurality of second electrode tab coupling portions 142. The additional can coupling portion 144 includes an additional contact portion 144a coupled onto the inner surface of the battery can 51 and an additional connection portion 144b connecting the end of the second electrode tab coupling portion 142 to the additional contact portion 144a.

The additional contact portion 144a is coupled onto the inner surface of the battery can 51. In the case where the beading part 76 is formed on the battery can 51, the additional contact portion 144a may be coupled onto the beading part 76, like the contact portion 143a. In addition, like the shape of the contact portion 143a shown in FIG. 26, at least a part of the additional contact portion 144a may also have a shape extending along the inner circumference of the battery can 51.

The additional connection portion 144b may include at least one bending portion whose extension direction is switched at least once between the second electrode tab coupling portion 142 and the additional contact portion 144a, similarly to the connection portion 143b described with reference to FIG. 25 above. Due to the formation of the bending portion, the additional connection portion 144b has a structure that can be contracted and stretched, and thus has an advantage in the assembly process of the cylindrical secondary battery 70 and a buffering effect, as described above.

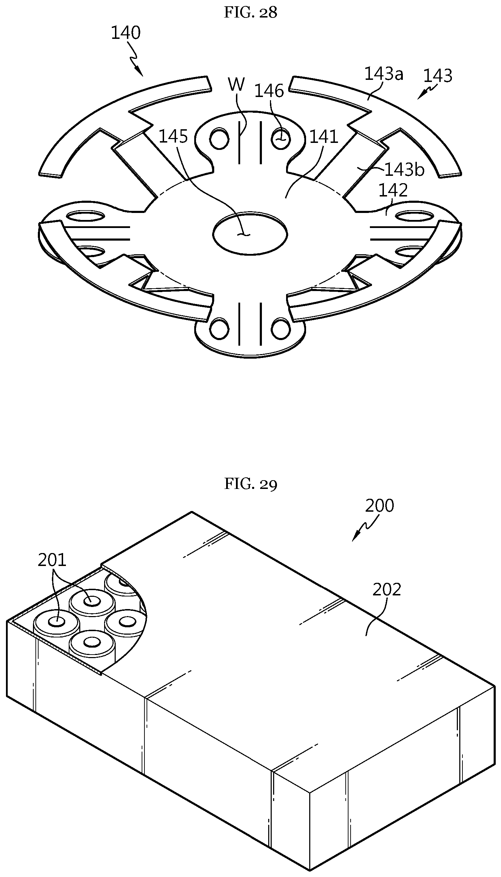

Referring to FIG. 28, the second current collector plate 140 may include at least one injection hole 146. The injection hole 146 may be provided in, for example, the second electrode tab coupling portion 142. When a plurality of second electrode tab coupling portions 142 are provided, the injection hole 146 may be provided in at least one second electrode tab coupling portion 142. The injection hole 146 may be provided, for example, in one side or both sides of the welding portion W formed on the second electrode tab coupling portion 142. In manufacturing the cylindrical secondary battery 70, the electrolyte may be injected after the assembly including the electrode assembly 71 and the second current collector plate 140 is accommodated in the battery can 51. At this time, the electrolyte may quickly flow into the electrode assembly 71 due to the injection hole 146, so that the injectability may be improved.

A plurality of injection holes 146 may be provided. The plurality of injection holes 146 may be disposed to be approximately symmetrical left and right with respect to the center portion of the second electrode tab coupling portion 142 in the width direction. A welding portion W for coupling the second electrode tab coupling portion 142 and the uncoated portion 72 of the second current collector plate may be formed between the injection holes 146 arranged to be approximately symmetrical left and right.

The second electrode tab coupling portion 142 may be formed to have a greater width at a location spaced apart from the connection portion toward the longitudinal end of the tab coupling portion by a predetermined distance, than a width at the connection portion between the second electrode tab coupling portion 142 and the center portion 141. At least a part of the region in which the injection hole 146 is formed may be included in the area that is increased as the width is increased at a location spaced apart from the connection portion toward the end of the second electrode tab coupling portion 142 by a predetermined distance, compared to the width at the connection portion between the second electrode tab coupling portion 142 and the center portion 141. On the other hand, the longitudinal end of the second electrode tab coupling portion 142 may have an approximately arc shape to correspond to the inner circumference of the battery can 51. In addition, as for the description of the structure of the second current collector plate 140 of FIG. 28, the description of the second current collector plate 140 previously described with reference to FIGS. 25 to 27 may be applied identically.

The current collector plates 120, 140 described above have a structure suitable for an electrode assembly 71 having a low resistance structure. Accordingly, the mechanical and electrical performance of the cylindrical secondary battery 70 including the same is improved. In addition, the cylindrical secondary battery 70 is easy to manufacture by a welding method.

The cylindrical secondary battery 70 according to the embodiment described above may be used to manufacture a battery pack.

FIG. 29 is a schematic diagram showing a battery pack according to an embodiment of the present disclosure.

Referring to FIG. 29, the battery pack 200 according to an embodiment of the present disclosure includes an assembly in which cylindrical secondary batteries 201 are connected, and a pack housing 202 accommodating the same. The cylindrical secondary battery 201 may be the secondary battery 70 according to the above-described embodiment. In the drawings, illustration of components such as a bus bar for connecting the cylindrical secondary batteries 201, a cooling unit, and an outer terminal is omitted for convenience of illustration.

The battery pack 200 may be mounted on a vehicle. The vehicle may be, for example, an EV, an HEV, or a plug-in hybrid vehicle (PHEV). The vehicle includes a four-wheeled vehicle or a two-wheeled vehicle.

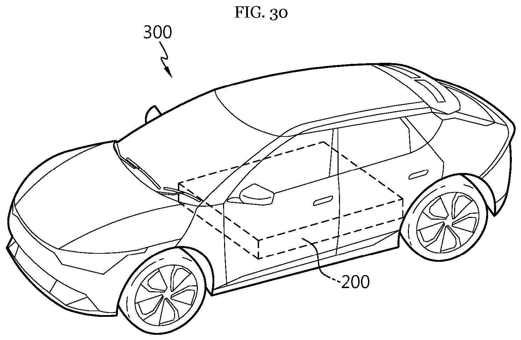

FIG. 30 is a diagram for explaining a vehicle including the battery pack 200 of FIG. 29.

Referring to FIG. 30, the vehicle 300 according to an embodiment of the present disclosure includes the battery pack 200 according to an embodiment of the present disclosure. The vehicle 300 operates by receiving power from the battery pack 200 according to an embodiment of the present disclosure.

In the description of the present disclosure, the terms "installation", "connection", "access", "coupling", etc. should be understood in a broad scope, unless there are other clear provisions and limitations, and, for example, it may be a fixed connection, a detachable connection, an integral connection, a mechanical connection, an electrical connection, a direct connection, an indirect connection through a medium, or an internal communication of two components. A person with ordinary skill in the technical field to which the present disclosure belongs may understand the specific meaning of the term in the present disclosure according to the specific situation.

In describing the present disclosure, the terms "first" and "second" are only for distinguishing similar structures, and do not describe a specific order or sequence. These numbers are interchangeable with each other or changeable with other numbers under appropriate circumstances.

In addition, although the present disclosure has been described by a limited number of embodiments and drawings, the present disclosure is not limited thereto, and it is obvious to those skilled in the art that various changes and modifications may be made thereto within the technical aspect of the present disclosure and the appended claims and equivalents thereof.

In view of the foregoing disclosure, the present invention may be implemented in accordance with the following itemized embodiment examples.
Item 1 A cylindrical secondary battery comprising:
   a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core;
   a cylindrical battery can configured to accommodate the electrode assembly through an open portion formed in one side and connected to the uncoated portion of the second electrode plate;
   a sealing body configured to seal the open portion of the battery can to enable insulating from the battery can;
   a first current collector plate connected to the uncoated portion of the first electrode plate;
   an electrode terminal riveted through a through hole formed in a bottom of the battery can located opposite to the open portion of the battery can and connected to the first current collector plate; and
   a laser welding portion formed on a contact surface of the first current collector plate and the electrode terminal,
   wherein the laser welding portion is located an overlapping area of the winding center hole, the first current collector plate and the electrode terminal.
Item 2 The cylindrical secondary battery according to item 1,
   wherein a converted diameter of the laser welding portion exposed to the surface of the first current collector plate is 0.15D to 0.90D (D: a diameter of the winding center hole).
Item 3. The cylindrical secondary battery according to item 1,
   wherein the electrode terminal includes:
   a body portion inserted into the through hole;
   an outer flange portion configured to extend from one side periphery of the body portion exposed through an outer surface of the bottom of the battery can along the outer surface;
   an inner flange portion configured to extend from the other side periphery of the body portion exposed through an inner surface of the bottom of the battery can toward the inner surface; and
   a flat portion provided on an inner side of the inner flange portion.
Item 4 The cylindrical secondary battery according to item 3,
   wherein in the flat portion, the electrode terminal and the first current collector plate are coupled by the laser welding portion.
Item 5 The cylindrical secondary battery according to item 1,
   wherein the laser welding portion is formed from one surface of the first current collector plate oriented toward an inner side of the winding center hole in the coupling area of the first current collector plate and the electrode terminal toward the electrode terminal.
Item 6 The cylindrical secondary battery according to item 1,
   wherein an outer surface of the electrode terminal is a smooth surface.
Item 7 The cylindrical secondary battery according to item 1,
   wherein the laser welding portion is an overlapping overlay type of a welding bead for a center portion of the winding center hole.
Item 8 The cylindrical secondary battery according to item 1,
   wherein the laser welding portion is configured in a linear shape.
Item 9 The cylindrical secondary battery according to item 8,
   wherein the laser welding portion forms a continuous closed straight line or closed curve.
Item 10 The cylindrical secondary battery according to item 8,
   wherein the laser welding portion is any one of a ring-shaped circle type centering on the center portion of the winding center hole and a wobble circle type centering on the center portion of the winding center hole.
Item 11 The cylindrical secondary battery according to item 1,
   wherein the laser welding portion is a multi spot type formed in a radially symmetrical position with respect to the center portion of the winding center hole.
Item 12 The cylindrical secondary battery according to item 1,
   wherein the laser welding portion is any one of an X-type in which two lines intersect at the center portion of the winding center hole, a rectangular border type centering on the center portion of the winding center hole, an L-type in which two lines meet at one point, and a 8 type in which two circles circumscribe.
Item 13 The cylindrical secondary battery according to item 1,
   wherein the laser welding portion has a center in the center portion of the winding center hole, has a polygonal regular or irregular outer circumference, and forms a welding bead in a weaving manner to fill the outer circumference.
Item 14 The cylindrical secondary battery according to item 1,
   wherein a welding portion tensile force between the first current collector plate and the electrode terminal by the laser welding portion is 3 kgf or more and 15 kgf or less.
Item 15 The cylindrical secondary battery according to item 1,
   wherein the first current collector plate and the electrode terminal are made of a material containing aluminum as a main component.
Item 16 The cylindrical secondary battery according to item 3,
   wherein the winding center hole has a diameter of 2 mm or more and 8 mm or less.
Item 17 The cylindrical secondary battery according to item 16,
   wherein the laser welding portion exposed to the surface of the first current collector plate has a converted diameter of 2 mm or more.
Item 18 The cylindrical secondary battery according to item 17,
   wherein the flat portion of the electrode terminal has a diameter of 3 mm to 14 mm.
Item 19 The cylindrical secondary battery according to item 18,
   wherein a ratio of an area of the laser welding portion exposed to the surface of the first current collector plate with respect to an area of the flat portion of the electrode terminal is 2.04% to 44.4%.
Item 20 The cylindrical secondary battery according to item 3,
   wherein the flat portion and the inner surface of the bottom are parallel to each other.
Item 21 The cylindrical secondary battery according to item 3,
   wherein an angle between the inner flange portion and the inner surface of the bottom is 0° to 60°.
Item 22 The cylindrical secondary battery according to item 3,
   wherein a recess portion is provided between the inner flange portion and the flat portion.
Item 23 The cylindrical secondary battery according to item 22,
   wherein the recess portion has a cross-sectional structure of an asymmetric groove.
Item 24 The cylindrical secondary battery according to item 3, further comprising a rivet gasket interposed between the electrode terminal and the through hole,
   wherein the rivet gasket includes:
   an outer gasket interposed between the outer flange portion and the outer surface of the bottom; and
   an inner gasket interposed between the inner flange portion and the inner surface of the bottom, and
   wherein the inner gasket has different thicknesses depending on locations.
Item 25 The cylindrical secondary battery according to item 24,
   wherein a height of the flat portion is equal to or greater than a height of an end of the inner gasket with respect to the inner surface of the bottom.
Item 26 The cylindrical secondary battery according to item 3,
   wherein a height of the flat portion is equal to or greater than a height of the inner flange portion with respect to the inner surface of the bottom.
Item 27 The cylindrical secondary battery according to item 24,
   wherein a height of the inner flange portion is greater than a height of an end of the inner gasket with respect to the inner surface of the bottom.
Item 28 The cylindrical secondary battery according to item 3,
   wherein a height of the electrode terminal from a lower surface of the outer flange portion to a surface of the flat portion is 1.5 mm to 7 mm.
Item 29 The cylindrical secondary battery according to item 3,
   wherein a height of the outer flange portion with respect to the outer surface of the bottom of the battery can is 0.8 mm or more.
Item 30 The cylindrical secondary battery according to item 24,
   wherein at least a part of the outer gasket is exposed to the outside of the outer flange portion, and
   wherein an exposure width of the outer gasket measured in a direction parallel to the outer surface of the bottom of the battery can is 0.1 mm to 1 mm.
Item 31 The cylindrical secondary battery according to item 3,
   wherein a radius from a center of the body portion to an edge of the outer flange portion is 10% to 70% with respect to a radius of the bottom of the battery can.
Item 32 The cylindrical secondary battery according to item 3,
   wherein a radius from a center of the body portion to an edge of the flat portion is 4% to 30% with respect to a radius of the bottom.
Item 33 The cylindrical secondary battery according to item 1,
   wherein the first current collector plate includes:
   a rim portion;
   a first electrode plate coupling portion extending inward from the rim portion and coupled with the uncoated portion of the first electrode plate; and
   a terminal coupling portion located to be spaced apart from the first electrode plate coupling portion, and
   wherein the electrode terminal is coupled with the terminal coupling portion.
Item 34 The cylindrical secondary battery according to item 33,
   wherein the cylindrical secondary battery further includes an insulator interposed between the battery can and the first current collector plate, and the electrode terminal is coupled with the terminal coupling portion through the insulator.
Item 35 The cylindrical secondary battery according to item 3, further comprising an insulator interposed between the first current collector plate and an inner circumference of the bottom of the battery can and between an inner circumference of a sidewall of the battery can and the electrode assembly.
Item 36 The cylindrical secondary battery according to item 35,
   wherein the insulator includes a welding hole configured to expose the flat portion of the electrode terminal to the first current collector plate, and covers a surface of the first current collector plate and one side edge of the electrode assembly.
Item 37 The cylindrical secondary battery according to item 36,
   wherein a height from the inner surface of the bottom of the battery can to the flat portion of the electrode terminal is equal to or smaller than a thickness of the insulator.
Item 38 The cylindrical secondary battery according to item 37, further comprising a rivet gasket interposed between the electrode terminal and the through hole,
   wherein the rivet gasket includes:
   an outer gasket interposed between the outer flange portion and the outer surface of the bottom; and
   an inner gasket interposed between the inner flange portion and the inner surface of the bottom, and
   wherein an end of the inner gasket is exposed to the outside of the inner flange portion.
Item 39 The cylindrical secondary battery according to item 36,
   wherein the welding hole exposes the flat portion and the inner flange portion of the electrode terminal.
Item 40 The cylindrical secondary battery according to item 38,
   wherein the welding hole exposes the flat portion and the inner flange portion of the electrode terminal, and the inner gasket.
Item 41 The cylindrical secondary battery according to item 33,
   wherein the rim portion is in the form of a rim whose inner area is at least partially empty.
Item 42 The cylindrical secondary battery according to item 33,
   wherein the first electrode plate coupling portion and the terminal coupling portion are connected by the rim portion.
Item 43 The cylindrical secondary battery according to item 33,
   wherein the terminal coupling portion is located in a center portion of an internal space of the rim portion.
Item 44 The cylindrical secondary battery according to item 33,
   wherein the first electrode plate coupling portion is provided in plurality.
Item 45 The cylindrical secondary battery according to item 44,
   wherein the plurality of first electrode plate coupling portions are arranged at equal intervals from each other along a circumferential direction.
Item 46 The cylindrical secondary battery according to item 33,
   wherein the terminal coupling portion is disposed at a position corresponding to the winding center hole.
Item 47 The cylindrical secondary battery according to item 1,
   wherein at least a partial area of the uncoated portion of the first electrode plate is divided into a plurality of segments, and the plurality of segments are bent along a radial direction of the electrode assembly.
Item 48 The cylindrical secondary battery according to item 47,
   wherein the plurality of segments are overlapped in multiple layers along the radial direction of the electrode assembly.
Item 49 The cylindrical secondary battery according to item 48,
   wherein the first current collector plate includes:
   a rim portion;
   a first electrode plate coupling portion extending inward from the rim portion and coupled with the uncoated portion of the first electrode plate; and
   a terminal coupling portion located to be spaced apart from the first electrode plate coupling portion, and
   wherein the first electrode plate coupling portion is coupled to an area in which the plurality of segments are overlapped in multiple layers.
Item 50 The cylindrical secondary battery according to item 1,
   wherein the battery can includes a beading part formed at an end adjacent to the open portion and press-fitted toward an inner side, and
   wherein the sealing body includes a cap plate with no polarity and a sealing gasket interposed between an edge of the cap plate and the open portion of the battery can.
Item 51 The cylindrical secondary battery according to item 50,
   wherein the battery can further includes a crimping part that is extended and bent to the inner side of the battery can and wraps and fixes the edge of the cap plate together with the sealing gasket.
Item 52 The cylindrical secondary battery according to item 50,
   wherein the cap plate includes a vent notch that ruptures when a pressure inside the battery can exceeds a threshold.
Item 53 The cylindrical secondary battery according to item 51, further comprising a second current collector plate coupled with the uncoated portion of the second electrode plate,
   wherein in the second current collector plate, at least a part of an edge that does not come into contact with the uncoated portion of the second electrode plate is interposed between the beading part and the sealing gasket and fixed by the crimping part.
Item 54 The cylindrical secondary battery according to item 53,
   wherein at least a part of the edge of the second current collector plate is fixed by welding to an inner circumference of the beading part adjacent to the crimping part.
Item 55 The cylindrical secondary battery according to item 53,
   wherein at least a partial area of the uncoated portion of the second electrode plate is divided into a plurality of segments, and the plurality of segments are bent along a radial direction of the electrode assembly.
Item 56 The cylindrical secondary battery according to item 55,
   wherein the plurality of segments are overlapped in multiple layers along the radial direction of the electrode assembly.
Item 57 The cylindrical secondary battery according to item 56,
   wherein the second current collector plate includes:
   a second electrode plate coupling portion coupled with the uncoated portion of the second electrode plate; and
   a can coupling portion electrically coupled to the beading part, and
   wherein the second electrode plate coupling portion is coupled to an area in which the plurality of segments are overlapped in multiple layers.
Item 58 The cylindrical secondary battery according to item 57,
   wherein the second electrode plate coupling portion and the can coupling portion are indirectly connected through a center portion of the second current collector plate and are not directly connected to each other.
Item 59 The cylindrical secondary battery according to item 57,
   wherein the second electrode plate coupling portion has at least one injection hole.
Item 60 The cylindrical secondary battery according to item 57,
   wherein the second current collector plate includes a circular current collector plate hole in a center portion of the second current collector plate.
Item 61 The cylindrical secondary battery according to item 60,
   wherein a diameter of the current collector plate hole is equal to or greater than a diameter of the winding center hole.
Item 62 A cylindrical secondary battery fabricating method, comprising:
   providing a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core;
   connecting a first current collector plate to the uncoated portion of the first electrode plate;
   providing a cylindrical battery can having an open portion formed in one side and including an electrode terminal riveted through a through hole formed in a bottom of the battery can located opposite to the open portion of the battery can;
   inserting the electrode assembly into the battery can so that the first current collector plate is oriented toward the bottom of the battery can; and
   forming a laser welding portion on a contact surface of the first current collector plate and the electrode terminal by using a laser welding device,
   wherein a laser beam of the laser welding device is irradiated into the winding center hole along a longitudinal direction of the winding center hole.
Item 63 The cylindrical secondary battery fabricating method according to item 62,
   wherein the laser welding portion is located in an overlapping area of the winding center hole, the first current collector plate and the electrode terminal.
Item 64 The cylindrical secondary battery fabricating method according to item 62,
   wherein a converted diameter of the laser welding portion exposed to the surface of the first current collector plate is 0.15D to 0.90D (D: a diameter of the winding center hole).
Item 65 The cylindrical secondary battery fabricating method according to item 62,
   wherein the laser welding device welds the first current collector plate to the electrode terminal in a pulse mode or a continuous mode.
Item 66 The cylindrical secondary battery fabricating method according to item 62,
   wherein the laser welding device irradiates the laser beam with a pulse width of 100 ns to 2000 ns.
Item 67 The cylindrical secondary battery fabricating method according to item 62,
   wherein the laser welding device irradiates the laser beam with an output of 50 W to 4 kW.
Item 68 The cylindrical secondary battery fabricating method according to item 62,
   wherein the laser welding device irradiates the laser beam with a processing speed of 40 mm/s to 1000 mm/s.
Item 69 The cylindrical secondary battery fabricating method according to item 62,
   wherein the laser beam of the laser welding device has a spot diameter of 10 µm to 200 µm.
Item 70 The cylindrical secondary battery fabricating method according to item 62,
   wherein a laser beam of a pulse dot type is irradiated and overlapped to a center portion of the winding center hole to form a laser welding portion of an overlapping overlay type.
Item 71 The cylindrical secondary battery fabricating method according to item 62,
   wherein the step of forming a laser welding portion includes:
   inserting a hollow tube into the winding center hole so that at least a part of the first current collector plate is exposed into an inner hollow of the hollow tube, and allowing the laser beam irradiated by the laser welding device to pass through the inner hollow of the hollow tube so that the first current collector plate is welded to the electrode terminal.
Item 72 The cylindrical secondary battery fabricating method according to item 71,
   wherein the first current collector plate is compressed to the electrode terminal by the hollow tube.
Item 73 The cylindrical secondary battery fabricating method according to item 71, wherein the method comprises supplying an inert gas for removing an oxygen atmosphere through a space between the hollow tube and an inner circumference of the winding center hole while the laser welding is being performed.
Item 74 The cylindrical secondary battery fabricating method according to item 71,
   wherein a length of the hollow tube is greater than a height of the electrode assembly, and the hollow tube is a metal hollow tube.
Item 75 The cylindrical secondary battery fabricating method according to item 71, wherein the method comprises removing welding fume at one end of the winding center hole while the laser welding is being performed.
Item 76 A cylindrical secondary battery fabricating method for fabricating the cylindrical secondary battery according to item 1,
   wherein the laser welding portion is formed by welding by irradiating a laser beam through the winding center hole at the inside of the battery can.
Item 77 The cylindrical secondary battery fabricating method according to item 76,
   wherein the laser beam heats from the first current collector plate.
Item 78 The cylindrical secondary battery fabricating method according to item 77,
   wherein a temperature difference is provided between a part where the laser beam is intensively irradiated and a surrounding area.
Item 79 The cylindrical secondary battery fabricating method according to item 77,
   wherein after preheating by the laser beam, full-scale melting occurs.
Item 80 The cylindrical secondary battery fabricating method according to item 76,
   wherein the laser beam is a single mode.
Item 81 A battery pack, comprising the cylindrical secondary battery according to any one of items 1 to 61.
Item 82 A vehicle, comprising the battery pack according to item 81.

## Claims

1. A cylindrical secondary battery comprising:
a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core;
a cylindrical battery can configured to accommodate the electrode assembly and connected to the uncoated portion of the second electrode plate;
a first current collector plate connected to the uncoated portion of the first electrode plate;
an electrode terminal formed in a bottom of the battery can and connected to the first current collector plate; and
a laser welding portion formed on a contact surface of the first current collector plate and the electrode terminal,
wherein the laser welding portion is located an overlapping area of the winding center hole, the first current collector plate and the electrode terminal.

2. The cylindrical secondary battery according to claim 1,
wherein a converted diameter of the laser welding portion exposed to the surface of the first current collector plate is 0.15D to 0.90D (D: a diameter of the winding center hole).

3. The cylindrical secondary battery according to claim 1 or 2,
wherein a through hole is formed in the bottom of the battery can, and
wherein the electrode terminal includes:
a body portion inserted into the through hole;
an outer flange portion configured to extend from one side periphery of the body portion exposed through an outer surface of the bottom of the battery can along the outer surface;
an inner flange portion configured to extend from the other side periphery of the body portion exposed through an inner surface of the bottom of the battery can toward the inner surface; and
a flat portion provided on an inner side of the inner flange portion.

4. The cylindrical secondary battery according to claim 3,
wherein in the flat portion, the electrode terminal and the first current collector plate are coupled by the laser welding portion.

5. The cylindrical secondary battery according to any one of the preceding claims,
wherein the laser welding portion is formed from one surface of the first current collector plate oriented toward an inner side of the winding center hole in the coupling area of the first current collector plate and the electrode terminal toward the electrode terminal.

6. The cylindrical secondary battery according to any one of the preceding claims,
wherein the laser welding portion is an overlapping overlay type of a welding bead for a center portion of the winding center hole.

7. The cylindrical secondary battery according to any one of the preceding claims,
wherein the first current collector plate includes:
a rim portion;
a first electrode plate coupling portion extending inward from the rim portion and coupled with the uncoated portion of the first electrode plate; and
a terminal coupling portion located to be spaced apart from the first electrode plate coupling portion, and
wherein the electrode terminal is coupled with the terminal coupling portion.

8. A cylindrical secondary battery fabricating method, comprising:
providing a jelly-roll type electrode assembly having a structure in which a first electrode plate and a second electrode plate having a sheet shape and a separator interposed therebetween are wound in one direction, the first electrode plate including an uncoated portion exposed to the outside of the separator at a long side end, the second electrode plate including an uncoated portion exposed to the outside of the separator at a long side end in a direction opposite to the uncoated portion of the first electrode plate, the electrode assembly having a winding center hole in an inner core;
connecting a first current collector plate to the uncoated portion of the first electrode plate;
providing a cylindrical battery can including an electrode terminal formed in a bottom of the battery can;
inserting the electrode assembly into the battery can so that the first current collector plate is oriented toward the bottom of the battery can; and
forming a laser welding portion on a contact surface of the first current collector plate and the electrode terminal by using a laser welding device,
wherein a laser beam of the laser welding device is irradiated into the winding center hole along a longitudinal direction of the winding center hole.

9. The cylindrical secondary battery fabricating method according to claim 8,
wherein the laser welding portion is located in an overlapping area of the winding center hole, the first current collector plate and the electrode terminal.

10. The cylindrical secondary battery fabricating method according to claim 8 or 9,
wherein a converted diameter of the laser welding portion exposed to the surface of the first current collector plate is 0.15D to 0.90D (D: a diameter of the winding center hole).

11. The cylindrical secondary battery fabricating method according to any one of claims 8 to 10,
wherein the step of forming a laser welding portion includes:
inserting a hollow tube into the winding center hole so that at least a part of the first current collector plate is exposed into an inner hollow of the hollow tube, and
allowing the laser beam irradiated by the laser welding device to pass through the inner hollow of the hollow tube so that the first current collector plate is welded to the electrode terminal.

12. The cylindrical secondary battery fabricating method according to claim 11,
wherein the first current collector plate is compressed to the electrode terminal by the hollow tube.

13. The cylindrical secondary battery fabricating method according to claim 11 or 12,
wherein the method comprises supplying an inert gas for removing an oxygen atmosphere through a space between the hollow tube and an inner circumference of the winding center hole while the laser welding is being performed.

14. The cylindrical secondary battery fabricating method according to any one of claims 11 to 13,
wherein a length of the hollow tube is greater than a height of the electrode assembly, and the hollow tube is a metal hollow tube.

15. The cylindrical secondary battery fabricating method according to any one of claims 11 to 14,
wherein the method comprises removing welding fume at one end of the winding center hole while the laser welding is being performed.

16. A cylindrical secondary battery fabricating method for fabricating the cylindrical secondary battery according to any one of claims 1 to 7,
wherein the laser welding portion is formed by welding by irradiating a laser beam through the winding center hole at the inside of the battery can.

17. The cylindrical secondary battery fabricating method according to claim 16,
wherein the laser beam heats from the first current collector plate.

18. The cylindrical secondary battery fabricating method according to claim 17,
wherein a temperature difference is provided between a part where the laser beam is intensively irradiated and a surrounding area.

19. The cylindrical secondary battery fabricating method according to claim 17 or 18,
wherein after preheating by the laser beam, full-scale melting occurs.

20. A battery pack, comprising the cylindrical secondary battery according to any one of claims 1 to 7.
